# FASCICULE DE BREVET EUROPEEN

(11) **EP 2 222 717 B1**
(45) Date de publication et mention de la délivrance du brevet: **29.02.2012**
(21) Numéro de dépôt: 08871973.7
(22) Date de dépôt: 28.11.2008
(51) Int. Cl.: C08F 2/26, C08F 2/00

(54) **DISPERSION AQUEUSE DE POLYMERE STRUCTUREE EN COEUR/ECORCE, SON PROCEDE DE PREPARATION ET SON APPLICATION DANS LES REVETEMENTS**
WÄSSRIGE POLYMERDISPERSION MIT KERN-HÜLLEN-STRUKTUR, VERFAHREN ZU IHRER HERSTELLUNG UND IHRE ANWENDUNG IN BESCHICHTUNGEN
POLYMER AQUEOUS DISPERSION WITH CORE/SKIN STRUCTURE, METHOD FOR MAKING SAME AND APPLICATION THEREOF IN COATINGS

(30) Priorité: 30.11.2007 FR 0708433
(43) Date de publication de la demande: 01.09.2010
(73) Titulaire: Arkema France, 92700 Colombes (FR)
(72) Inventeur: BOONE, Alain, F-60140 Verderonne (FR); NOUGUEREDE, Olivier, F-60340 Saint Leu d'Esserent (FR); BETREMIEUX, Isabelle, F-60580 Coye La Forêt (FR); LOZE, Jean-Yves, F-60700 Pontpoint (FR); ALLORANT, Olivia, 85079 Neubiberg (DE)
(74) Mandataire: Killis, Andréas
(86) Numéro de dépôt international: PCT/FR2008/001658
(87) Numéro de publication internationale: WO 2009/095569

(56) Documents cités:
- EP-A- 0 609 756
- EP-A- 0 619 342
- WO-A-2004/069933
- FR-A- 2 867 478

## Description

La présente invention concerne une dispersion aqueuse de polymère spécifique pour la préparation de peintures décoratives et industrielles, un procédé de préparation d'une telle dispersion, et des compositions correspondantes de revêtements et de traitements.

La dispersion aqueuse selon la présente invention est, soit une dispersion obtenue par polymérisation en émulsion, en au moins deux étapes, d'au moins deux compositions spécifiques de monomères, soit un mélange de cette même dispersion avec une autre dispersion, ladite dispersion de l'invention étant obtenue en présence d'un système tensioactif spécifique comprenant au moins un tensioactif phosphaté.

Compte tenu des restrictions de plus en plus sévères en termes de réglementations environnementales contre les émissions de composés organiques volatiles (COV), il est recherché des systèmes aqueux pour des applications de revêtements, et plus particulièrement pour des peintures brillantes, à faibles émissions COV et offrant un bon compromis blocking/flexibilité.

EP 789 724 décrit une émulsion aqueuse de polymère dispersé A obtenue par polymérisation en émulsion d'au moins deux compositions différentes de monomères, en deux étapes successives, et comprenant en plus un monomère de greffage porteur d'un groupement uréido et un composé B polyaldéhyde.

DE 199 52 671 décrit un polymère en émulsion comprenant au moins une première phase ayant une Tg entre -10 et 40°C, et une seconde phase ayant une Tg entre 50 et 120°C, la première et/ou la seconde phase contenant de 0,1 à 10% en poids d'un monomère promoteur d'adhésion azoté, et la première phase contenant au moins 10% en poids d'un composé vinyl aromatique.

FR 2 889 196 décrit une dispersion aqueuse de polymère sous la forme de particules structurées de diamètre moyen compris entre 70 et 300 nm comprenant au moins un premier polymère ayant une Tg1 entre -50 et 0°C et représentant de 30 à 70% en poids du total des particules, et au moins un deuxième polymère ayant une Tg2 entre 10 et 80°C et représentant de 30 à 70% en poids du total des particules, et avec la différence Tg2 - Tg1 située entre 45 et 100°C.

Le problème technique restant à résoudre par rapport à cet état de l'art est la mise au point d'une dispersion stable, ayant une température minimale de formation de film (TMF) inférieure ou égale à 0°C, pour la formulation de peintures brillantes, ces dernières présentant une bonne résistance au blocking tout en conservant une bonne flexibilité. Il s'agit en fait d'un compromis de performances difficile à atteindre par la technologie de polymérisation en émulsion. De même, la stabilité de cette dispersion doit être suffisante afin d'éviter tout risque de gélification ou de floculation dans les conditions de polymérisation en émulsion, mais également dans les conditions de stockage ou d'utilisation finale de cette dispersion. Dans ce contexte, ladite dispersion doit présenter un faible coagulum (taux de grains résiduels), un faible taux d'accrochage, et permettre ainsi une faisabilité (reproductibilité) satisfaisante au niveau industriel, en évitant tout encrassement du réacteur.

La dispersion aqueuse de polymère spécifique selon la présente invention remédie aux inconvénients que présentent les dispersions de l'état de l'art et convient particulièrement à la préparation de revêtements, et plus particulièrement de peintures décoratives et industrielles brillantes, répondant de manière satisfaisante aux besoins et exigences suivantes :
- un bon compromis entre résistance au blocking et flexibilité,
- une bonne résistance à la fissuration,
- une brillance satisfaisante,
- une bonne résistance à l'eau,
- une stabilité satisfaisante des formulations de revêtements,
- un faible taux de COV.

Par rapport aux dispersions de l'état de l'art antérieur, les dispersions aqueuses de la présente invention présentent un excellent compromis de performances, a priori difficiles à résoudre, grâce à une structure des particules et des conditions de polymérisation spécifiques, et ce par le contrôle de la nature et du taux de tensioactif spécifique utilisé, ce dernier étant un tensioactif phosphaté.

Le premier objet de la présente invention est donc une dispersion aqueuse de polymère, comprenant des particules de polymère structurées en coeur/écorce, pouvant s'obtenir par polymérisation en émulsion d'au moins deux compositions de monomères, en au moins deux étapes, cette dispersion ayant comme caractéristique spécifique essentielle l'utilisation d'un système tensioactif comprenant au moins un tensioactif anionique phosphaté à des taux particuliers dans chacune des phases polymères constituant ladite particule structurée.

Le deuxième objet de l'invention concerne un procédé de préparation de ladite dispersion.

Un autre objet de l'invention concerne une composition de dispersions aqueuses de polymère obtenue par simple mélange d'au moins une dispersion de l'invention telle que définie précédemment, avec au moins une autre dispersion de l'invention telle que définie précédemment, mais présentant des caractéristiques différentes, ou avec au moins une autre dispersion qui est différente de celle de l'invention telle que définie précédemment.

Fait aussi partie de l'invention un procédé de préparation de ladite composition de dispersions aqueuses de polymère.

Un objet supplémentaire de l'invention est une composition de revêtement ou une composition de traitement, comprenant au moins une dispersion aqueuse de polymère selon l'invention, ou au moins une composition de dispersions aqueuses de polymère selon l'invention.

Un autre objet concerne l'utilisation de la dispersion de l'invention dans des compositions de revêtements de protection et/ou de décoration, en particulier pour bois, métal, plastique, plâtre, béton ou verre.

Fait aussi partie de l'invention un revêtement résultant de l'utilisation d'au moins une dispersion, ou d'une composition de dispersions, ou d'une composition de revêtement telle que précitée.

Le dernier objet de l'invention est un substrat revêtu d'une composition de revêtement selon l'invention.

Ainsi, le premier objet de la présente invention est une dispersion aqueuse de polymère comprenant des particules de polymère structurées en coeur/écorce, susceptible d'être obtenue par polymérisation en émulsion d'au moins deux compositions de monomères 1 et 2, en au moins deux étapes, lesdites compositions de monomères 1 et 2 donnant des polymères P1 et P2 possédant des températures de transition vitreuse respectives Tg1 et Tg2, avec Tg1 étant inférieure ou égale à 30°C, de préférence de -60 à 30°C, et encore plus préférentiellement de -40 à 20°C, et Tg2 étant supérieure ou égale à 80°C, de préférence de 80 à 180°C, et encore plus préférentiellement de 90 à 150°C, et la différence Tg2 - Tg1 variant de 50 à 200°C, et de préférence de 90 à 150°C, et ladite polymérisation étant réalisée en présence d'au moins un tensioactif anionique phosphaté, qui est présent :
a) soit uniquement dans la phase polymère P1,
b) soit dans les phases polymères P1 et P2, à condition dans ce cas que le rapport en poids : tensioactif anionique phosphaté dans P1 / tensioactif anionique phosphaté dans P2 soit supérieur à 1,
le taux en poids dudit tensioactif anionique phosphaté allant de 0,5 à 5% en poids, de préférence de 0,5 à 3 %, et encore plus préférentiellement de 1 à 3% en poids par rapport au poids total de monomères de ladite dispersion (le taux en poids de tensioactif anionique phosphaté représentant le % en poids de matière active de tensioactif anionique phosphaté pour 100% en poids de matière active de monomères).

Les valeurs des Tg des phases P1 et P2 sont définies telles que calculées par la relation de Fox (T. G. Fox, Bull. Am. Physics Soc., Vol. 1 (3), page 123 (1956)).

La structure coeur/écorce, aussi connue par le terme anglais « core-shell », caractérisée une particule à 2 phases distinctes de Tg différentes, lesdites phases pouvant être identifiées par DSC (calorimétrie à balayage différentiel) ou DMA (analyse mécanique dynamique). Ladite structure coeur/écorce peut être identifiée par des techniques microscopiques, tels que la TEM (microscopie électronique à transmission) ou l'AFM (microscopie à force atomique).

Le taux de la phase P1 représente de 75 à 85% en poids du total de P1 + P2, de préférence de 78 à 83%, et le taux de la phase P2 représente de 15 à 25% en poids du total P1 + P2, de préférence de 17 à 22%.

Ledit tensioactif anionique phosphaté est présent au moins dans la phase polymère P1, et optionnellement il est aussi présent dans la phase polymère P2, mais dans ce dernier cas avec un rapport en poids : tensioactif anionique phosphaté dans P1 / tensioactif anionique phosphaté dans P2 supérieur à 1, et avec un taux global en poids dudit tensioactif par rapport au poids total de monomères de ladite dispersion allant de 0,5 à 5%, de préférence de 0,5 à 3 %, et encore plus préférentiellement de 1 à 3%.

Ledit tensioactif phosphaté peut être sélectionné parmi les esters mono- et/ou di-esters phosphates et/ou phosphinates et/ou phosphonates à base d'au moins un alcool gras, de préférence alkoxylé. Plus particulièrement, il peut être un phosphate d'alcool gras éthoxylé et/ou propoxylé, de préférence avec un nombre d'unités éthoxy et/ou propoxy allant de 2 à 30, et de préférence de 2 à 10. Ledit alcool gras peut être un alcool en C₆ à C₃₂, de préférence en C₉ à C₂₂, avec un nombre total d'unités éthoxy et/ou propoxy allant de 2 à 30, et de préférence de 3 à 25. De manière encore plus préférée, ledit tensioactif peut comporter en plus une insaturation éthylénique copolymérisable. L'importance du tensioactif phosphaté dans les conditions décrites selon l'invention est particulièrement démontrée sur la stabilité de la dispersion aqueuse lors de la polymérisation, en comparaison à d'autres tensioactifs conventionnels de l'état de l'art (voir partie expérimentale). Plus particulièrement, l'avantage de ce type de tensioactif par rapport aux tensioactifs usuels est d'éviter des problèmes de floculation et d'instabilité, dans les conditions spécifiques de l'invention.

Les dispersions selon la présente invention peuvent présenter de faibles coagulums ou taux de grains résiduels, ces derniers étant de préférence inférieurs à 300 ppm, et plus préférentiellement inférieurs à 100 ppm, mesurés selon la norme ISO 4576:1996. De préférence, elles présentent également des faibles taux d'accrochage qui sont inférieurs ou égaux à 0,1%, de préférence inférieurs ou égaux à 0,08%, et encore plus préférentiellement inférieurs ou égaux à 0,01%, mesurés selon le test décrit en partie expérimentale. Enfin, la stabilité desdites dispersions aqueuses peut aussi être évaluée par une mesure de leur viscosité, cette dernière étant de préférence inférieure à 10000 mPa.s, et plus préférentiellement inférieure à 5000 mPa.s.

Selon un mode de réalisation plus particulier, au moins un tensioactif non ionique est combiné avec au moins un tensioactif phosphaté tel que défini selon la présente invention, ce tensioactif non ionique pouvant représenter de 5 à 50%, et de préférence de 10 à 30% du poids total des tensioactifs.

Les compositions de monomères 1 et/ou 2 comprennent au moins un monomère éthyléniquement insaturé, pouvant être choisi parmi les monomères à caractère hydrophobe, et plus particulièrement parmi : le styrène et ses dérivés comprenant les vinyltoluènes (ortho, méta, para), α-méthylstyrène, tert-butylstyrène, para-butylstyrène, para-décylstyrène, les esters méthacryliques d'alcools en C₁ à C₁₈, l'acrylonitrile et les esters vinyliques. Les monomères éthyléniquement insaturés sont préférentiellement sélectionnés parmi le styrène et ses dérivés, le (méth)acrylate de méthyle, le (méth)acrylate de butyle, l'acrylate de 2-éthylhexyle et l'acrylonitrile. Les dispersions aqueuses de polymère selon la présente invention peuvent être soit purement acrylique, soit de type styrène-acrylique.

Les compositions de monomères 1 et/ou 2 comprennent au moins un monomère éthyléniquement insaturé porteur d'au moins une fonction carboxylique et/ou anhydride carboxylique, pouvant être choisi parmi l'acide (méth)acrylique, l'acide itaconique, l'acide fumarique, l'acide maléique, l'acide crotonique, l'acide isocrotonique, l'acide vinylbenzoïque, et de préférence parmi les acides (méth)acrylique, maléique, fumarique, itaconique et leurs anhydrides.

Selon un mode de réalisation plus particulier, une composition de monomères 3 est additionnée et polymérisée entre les compositions de monomères 1 et 2. La phase polymère P3, correspondant à la composition de monomères 3, peut représenter par rapport à P1 un taux en poids allant de 5 à 50%, et avec P1 + P3 représentant un taux en poids allant de 70 à 90% par rapport au total P1 + P2 + P3, et avec P3 ayant une Tg3 ne dépassant pas 30°C.

Selon la présente invention, la composition de monomères 1 peut être la composition moyenne pondérale d'une composition de semence ajoutée et pré-polymérisée en étape d'ensemencement, avant addition et polymérisation du reste des monomères d'une composition qui peut être identique ou différente par rapport à la composition de semence. Dans le cas où les deux compositions sont différentes, la composition globale de monomères 1 est la moyenne pondérale entre les 2 compositions de cette 1^{ère} étape. En option, la composition de monomères 2 peut aussi être une composition moyenne pondérale d'une composition de semence ajoutée et pré-polymérisée en étape d'ensemencement, avant addition et polymérisation du reste des monomères d'une composition qui peut être identique ou différente par rapport à la composition de semence. Dans le cas où les deux compositions de cette 2^{ème} étape sont différentes, la composition globale de monomères 2 de cette 2^{ème} étape sera la moyenne pondérale de ces 2 compositions de monomères.

La composition de monomères 2 peut comprendre au moins un monomère ayant une fonction d'agent réticulant interne, de préférence à un taux allant de 0,01 à 5% en poids par rapport à la quantité totale de monomères de ladite dispersion, à condition que ce taux ne dépasse pas 5% en poids par rapport à la composition de monomères 2. Dans ce cas, ce monomère possède au moins deux doubles liaisons copolymérisables, et peut être choisi parmi :
- les di(méth)acrylates, comme le diméthacrylate d'éthylène glycol, le diméthacrylate de 1,3-butylène glycol, le diacrylate de 1,4-butanediol, le di(méth)acrylate de 1,6-hexanediol, ou les diols multi-fonctionnels, tels que les diols triacrylates comme le triméthylolpropane triacrylate, ou
- les polyallyliques comme le triallyl cyanurate, le triallyl trimésate ou trimésitate (benzène 1,3,5-tricarboxylate), ou le maléate de diallyle.

Parmi les monomères préférés ayant une fonction d'agent réticulant interne, on peut citer le triacrylate de triméthylolpropane et le di(méth)acrylate de 1,6-hexanediol.

Les compositions de monomères 1 et/ou 2 et/ou 3 peuvent aussi comprendre au moins un monomère ayant une fonction d'agent greffant, de préférence à un taux de 0,01 à 2% en poids par rapport à la quantité totale de monomères de ladite dispersion, à condition que ce taux ne dépasse pas 5% en poids par rapport aux compositions de monomères 1 et/ou 2 et/ou 3. Comme exemple d'agent greffant, on peut citer le (méth)acrylate d'allyle ou le (méth)acrylate de dicyclopentényl-oxyéthyle (DCPOEMA). De préférence, le monomère ayant une fonction d'agent greffant est présent dans les compositions de monomères 1 et/ou 3.

Les compositions de monomères 1 et/ou 2 et/ou 3 peuvent aussi comprendre au moins un monomère fonctionnel à un taux allant de 0,1 à 30%, de préférence de 0,1 à 20%, et encore plus préférentiellement de 0,1 à 10% en poids par rapport à la quantité totale de monomères de ladite dispersion, à condition que ce taux ne dépasse pas 30% en poids par rapport aux compositions de monomères 1 et/ou 2 et/ou 3. Ledit monomère fonctionnel peut être sélectionné parmi :
- les promoteurs d'adhésion tels que l'acrylamide, le (méth)acrylate de diméthylaminoéthyle, le (méth)acrylate de diméthylaminopropyle, le (méth)acrylate de 3-diméthylamino-2,2-diméthyl-1-propyl, le (méth)acrylate de N-2-morpholinoéthyle, le (méth)acrylate de N-2-pipéridinoéthyle, le N-3-diméthylaminopropyl(méth)acrylamide, le N-diméthylaminoéthyl(méth)acrylamide, le N-diéthylaminoéthyl-(méth)acrylamide, le N-4-morpholinométhyl(méth)acrylamide, le vinylimidazole, le N-(2-acryloyloxyéthyl)éthylène urée, tel que le Norsocryl^{®} 102 (aussi appelé 2-(2-oxoimidazolidin-1-yl)éthyl méthacrylate), le N-(β-acrylamidoéthyl)éthylène urée, le N-2-(allyl-carbamato)amino-éthylimidazolidinone, le N-(3-allyloxy-2-hydroxy-propyl)amino-éthyléthylène urée, le N-vinyléthylène urée, le N-vinyloxyéthyléthylène urée, le N-méthacryloxyacétoxy-éthyléthylène urée, le N-(acrylamidométhylène)éthylène urée, le N-(méthacrylamido-méthylène)éthylène urée, le N-(2-méthacryloyloxyéthyl)éthylène urée, le N-(méthacrylamidoéthyl)éthylène urée, tel que le Sipomer^{®} WAM II, ou
- les monomères réticulants à réactivité latente, c'est-à-dire pouvant être activés au moment de la filmification ou du séchage (impliqués dans une étape de post-réticulation) soit seuls, soit en présence d'un agent co-réactif. Les groupements à réactivité latente peuvent réagir lors d'une étape ultérieure à la polymérisation, par exemple lors de l'application du revêtement, pour donner une structure réticulée lors de l'étape de filmification de la dispersion. Des groupements réticulants latents convenables pour l'invention peuvent être choisis parmi les groupements : acide, acétoacétoxy, tel que porté par le (méth)acrylate d'acétoacétoxyéthyl, diacétone, tel que porté par le diacétone acrylamide, N-hétérocyclique, amine, amide, tel que le N-méthylolacrylamide, oxazoline, mélamine, tel que l'hexa-méthoxy-méthyl-mélamine, aziridine, carbodiimide, oxyrane, isocyanate, triazine, tel que le tris(alkoxycarbonylamino)triazine. Comme exemple de monomères réticulants préférés, on peut citer l'acétoacétoxyéthyl(méth)acrylate, ce dernier pouvant être utilisé en combinaison avec un monomère multifonctionnel acrylique (MFA) comme agent co-réactif, ou le diacétone acrylamide, ce dernier pouvant être utilisé en combinaison avec l'acide adipique bis-hydrazide (AADH) comme agent co-réactif. Dans le cas où les groupements fonctionnels latents sont utilisés en combinaison avec un agent co-réactif, ce dernier est post-additionné à ladite dispersion à froid après polymérisation, de préférence avant neutralisation.

Selon une variante préférée de l'invention, les compositions de monomères 1 et/ou 2 et/ou 3, et encore plus préférentiellement la composition de monomères 1, peuvent comprendre en combinaison à la fois un promoteur d'adhésion et un monomère réticulant à réactivité latente. De manière encore plus préférée, ladite combinaison est constituée d'acrylamide et de diacétone acrylamide.

Les compositions de monomères 1 et/ou 3 peuvent également comprendre au moins un agent de transfert de chaîne, de préférence choisis parmi les mercaptans, à un taux allant de 0,01 à 1% en poids par rapport au poids total de monomères de ladite dispersion.

Comme amorceurs convenables pour l'invention, on peut citer des amorceurs minéraux ou des amorceurs organiques. Comme amorceurs préférés, on peut citer des peroxydes minéraux, tel que le persulfate de métal alcalin, par exemple le persulfate de sodium, ou des peroxydes organiques comme les hydroperoxydes d'alkyles, tel que le terbutyl-hydroperoxyde (TBHP), ou de l'eau oxygénée pure, ou des amorceurs azo, tel que le 2,2'-azobis-isobutyronitrile ou le 2,2'-azobis-2-méthyl-N-(2-hydroxyéthyl)propionamide. On peut également citer l'utilisation de combinaisons d'amorceurs, telle que la combinaison d'un persulfate de métal alcalin avec un peroxyde organique, ou la combinaison d'un persulfate de métal alcalin avec de l'eau oxygénée. L'amorçage pourra être réalisé soit par voie thermique, soit par voie rédox.

Le deuxième objet de l'invention concerne un procédé spécifique de préparation d'une dispersion aqueuse de polymère selon l'invention telle que définie ci-dessus. Cette dispersion peut s'obtenir par un procédé comprenant au moins deux étapes de polymérisation en émulsion d'au moins deux compositions de monomères 1 et 2, donnant des polymères P1 et P2 possédant des Tg respectives Tg1 et Tg2, telles que Tg1 est inférieure ou égale à 30°C, de préférence de -60 à 30°C, et plus préférentiellement de -40 à 20°C, et Tg2 est supérieure ou égale à 80°C, de préférence de 80 à 180°C, et plus préférentiellement de 90 à 150°C, et la différence Tg2 - Tg1 varie de 50 à 200°C, et de préférence de 90 à 150°C, et ladite polymérisation étant réalisée en présence d'au moins un tensioactif anionique phosphaté, qui est présent :
a) soit uniquement dans la phase polymère P1,
b) soit dans les phases polymères P1 et P2, à condition dans ce cas que le rapport en poids : tensioactif anionique phosphaté dans P1 / tensioactif anionique phosphaté dans P2 soit supérieur à 1,
le taux en poids dudit tensioactif anionique phosphaté allant de 0,5 à 5% en poids, de préférence de 0,5 à 3 %, et encore plus préférentiellement de 1 à 3% en poids par rapport au poids total de monomères de ladite dispersion, et avec ledit tensioactif étant absent du pied de réacteur ou étant réparti de manière à ce que la proportion en poids dudit tensioactif dans la phase aqueuse en pied de réacteur représente un taux en poids allant de 0 à 50%, de préférence de 5 à 50%, et encore plus préférentiellement de 10 à 35% du total dudit tensioactif dans la dispersion. Plus particulièrement, dans le cas où un monomère réticulant à réactivité latente nécessitant un agent co-réactif pour réagir est présent, ledit agent co-réactif devra être ajouté après polymérisation, et de préférence avant neutralisation.

Dans le cas où ledit tensioactif phosphaté est absent du pied de réacteur, ledit pied de réacteur contient dans ce cas un tensioactif anionique pouvant être choisi parmi les sulfonates et/ou sulfates d'alkyle en C₁₂ à C₁₄.

Selon une variante plus particulière de ce procédé, ladite polymérisation en émulsion peut comprendre une étape d'ensemencement par pré-polymérisation partielle d'une composition de semence représentant en poids de 2 à 15%, de préférence de 2 à 10%, et encore plus préférentiellement de 5 à 10% de ladite composition de monomères 1, ladite composition de semence pouvant être identique ou différente de la composition du reste de monomères de ladite composition de monomères 1. Dans le cas où la composition de semence est différente, la composition globale de monomères 1 correspond à la moyenne pondérale des deux compositions citées.

De préférence, la dispersion aqueuse de polymère selon l'invention peut être obtenue par un procédé de polymérisation en émulsion comprenant au moins les étapes suivantes :
a) addition en pied de réacteur d'une composition de semence, identique ou différente de la composition du reste de monomères de ladite composition de monomères 1, ladite semence représentant de 2 à 15%, de préférence de 2 à 10%, et encore plus préférentiellement de 5 à 10% en poids du total de ladite composition de monomères 1, ledit pied de réacteur contenant déjà ledit tensioactif phosphaté en solution aqueuse à un taux en poids représentant 0-50%, de préférence 5-50%, et encore plus préférentiellement 10-35% du total dudit tensioactif dans la dispersion, et ledit tensioactif pouvant être sélectionné parmi les mono- et/ou di-esters phosphates et/ou phosphinates et/ou phosphonates à base d'au moins un alcool gras, de préférence alkoxylé, ou ledit pied de réacteur ne contenant pas ledit tensioactif phosphaté,
b) ensemencement par pré-polymérisation de ladite composition de semence, avec obtention d'une semence de particules de polymère à un taux de conversion d'au moins 60%, et de préférence allant de 60 à 99%,
c) addition continue du reste de monomères de ladite composition de monomères 1, ce reste de monomères pouvant avoir une composition identique ou différente de celle de la semence, et ce reste de monomères comprenant le reste dudit tensioactif phosphaté, si ledit tensioactif est présent uniquement en phase P1, ou optionnellement comprenant une partie du reste dudit tensioactif phosphaté, si ledit tensioactif est présent dans les deux phases P1 et P2, et polymérisation jusqu'à un taux de conversion d'au moins 95%, et de préférence d'au moins 98%, avant l'addition de la composition de monomères 2, avec ou sans étape d'ensemencement, et éventuellement avant l'addition d'une composition de monomères 3 selon l'option définie à l'étape d) ci-dessous,
d) en option, addition et polymérisation d'au moins une composition de monomères 3, identique ou différente des compositions de monomères 1 et 2, additionnée avant l'étape e), et avec la phase polymère correspondante P3 représentant un taux en poids allant de 5 à 50% par rapport à P1, et avec P1 + P3 représentant un taux de 70 à 90% en poids du total P1 + P2 + P3, et P3 ayant une Tg3 ne dépassant pas 30°C, lesdites compositions de monomères 1 et/ou 2 et/ou 3 comprenant au moins un monomère fonctionnel, de préférence à un taux allant de 0,1 à 30%, plus préférentiellement de 0,1 à 20%, et encore plus préférentiellement de 0,1 à 10% en poids par rapport à la quantité totale de monomères de ladite dispersion, à condition que ce taux ne dépasse pas 30% en poids par rapport aux compositions de monomères 1 et/ou 2 et/ou 3, et/ou lesdites compositions de monomères 1 et/ou 2 et/ou 3 comprenant au moins un monomère greffant, tels que le (méth)acrylate d'allyle ou le (méth)acrylate de dicyclopentényl-oxyéthyle (DCPOEMA), de préférence à un taux allant de 0,01 à 2% en poids par rapport à la quantité totale de monomères de ladite dispersion, à condition que ce taux ne dépasse pas 5% en poids par rapport aux compositions de monomères 1 et/ou 2 et/ou 3,
e) addition de ladite composition de monomères 2, avec ou sans étape d'ensemencement, et polymérisation jusqu'à un taux de conversion total, ce taux de conversion pouvant être au moins de 99%, mesuré par gravimétrie (extrait sec à l'étuve selon la norme ISO 3251),
f) en fonction de la présence ou non d'un monomère réticulant à réactivité latente nécessitant un agent co-réactif, post-addition dudit agent co-réactif après polymérisation, de préférence avant neutralisation.

Le troisième objet de l'invention concerne une composition de dispersions aqueuses de polymère pouvant être obtenue par simple mélange d'au moins une dispersion selon l'invention, avec :
- au moins une autre dispersion telle que définie précédemment selon l'invention, mais présentant des caractéristiques différentes, ou
- au moins une autre dispersion différente de celle de l'invention (hors du champ de dispersions telles que définies précédemment selon l'invention).

Dans le deuxième cas, lorsque ladite autre dispersion aqueuse est différente de celle obtenue selon l'invention, elle peut être choisie parmi les dispersions aqueuses à base de résines et/ou polymères et/ou copolymères de Mw < 200 000, de préférence choisis parmi les résines alkydes non modifiées ou modifiées ou traitées par traitement oxydant, telles que celles décrites dans la demande de brevet WO 2004/069933, les polymères ou copolymères acryliques, y compris styrène-acrylique ou styrène-anhydride maléique, ou parmi les résines d'hydrocarbures, les résines de colophane, les polyuréthanes thermoplastiques ou ramifiés, les polyesters saturés ou insaturés, les oligomères (méth)acryliques multifonctionnels, tels que les époxyacrylates, les uréthane-acrylates, les acrylates acrylés. Ces polymères ou copolymères sont dispersés à l'aide de tensioactifs de faible masse ou à l'aide de tensioactifs polymères, ou en option à l'aide de groupements hydrophiles, propres à leur structure, les rendant auto-dispersibles.

Dans le deuxième cas, où ladite autre dispersion aqueuse est différente de celle obtenue selon l'invention, et qu'il s'agit d'une résine alkyde modifiée chimiquement, cette alkyde modifiée peut être choisie entre autres parmi les alkydes siliconées, les alkydes uréthanes, les alkydes acryliques, les alkydes styrène-acryliques ou les alkydes modifiées styrène.

Dans le cas où ladite autre dispersion aqueuse différente de celle obtenue selon l'invention est une dispersion aqueuse de résine alkyde, traitée par traitement oxydant (traitement sur dispersion aqueuse), ladite dispersion aqueuse de résine alkyde traitée peut résulter d'un mélange d'au moins deux dispersions aqueuses de résines alkydes différentes ou d'un mélange d'une dispersion alkyde avec une émulsion de type acrylique ou styrène-acrylique ou vinylique compatible avec ladite alkyde, ou avec une dispersion aqueuse de polyuréthane, ou d'un autre polymère compatible avec ladite résine alkyde non traitée. Dans le cas de dispersions d'alkydes non traitées par voie oxydante, on peut envisager les mêmes types de mélanges, convenables pour ladite composition de dispersions selon l'invention.

Un autre objet de l'invention est un procédé de préparation d'une composition de dispersions aqueuses de polymère telle que définie précédemment selon l'invention, ledit procédé comprenant au moins l'étape de simple mélange d'au moins une dispersion telle que définie selon l'invention, avec une autre dispersion aqueuse de polymère telle que définie selon l'invention, mais présentant des caractéristiques différentes, ou avec une autre dispersion différente de celle telle que définie précédemment selon l'invention. Ce procédé présente l'avantage de pouvoir ajuster les performances du produit final par simple mélange d'au moins une dispersion telle que définie précédemment selon l'invention.

La présente invention couvre aussi une composition de revêtement ou de traitement, en particulier pour le traitement du textile, comprenant au moins une dispersion telle que définie précédemment selon l'invention, ou comprenant au moins une composition de dispersions telle que définie ci-dessus selon l'invention. Une telle composition de revêtement peut être une composition de revêtement de protection et/ou de décoration, d'ameublement, d'arts graphiques, de menuiserie, pouvant être sélectionnée parmi les peintures, vernis ou lasures, ou bien une telle composition peut être une composition de traitement de fibres naturelles ou de fibres de verre ou de fibres de synthèse, optionnellement sous forme de non tissés. Plus particulièrement, les dispersions de l'invention conviennent pour des peintures brillantes pour bois, intérieur ou extérieur, décoratif ou industriel.

La dispersion telle que définie selon la présente invention, ou obtenue selon le procédé de l'invention correspondant, et la composition de dispersions telle que définie selon la présente invention, ou obtenue selon le procédé de l'invention correspondant, peuvent être utilisées dans des revêtements, et plus particulièrement dans des revêtements pour la protection et/ou la décoration, l'ameublement, les arts graphiques et la menuiserie, ou peut aussi être utilisée pour le traitement de fibres naturelles ou de fibres de verre ou de fibres de synthèse. De préférence, les revêtements pour la protection et/ou la décoration sont des revêtements brillants ou satinés, et des substrats convenables pour ce type de revêtements peuvent être le bois, le carton, le métal, le plastique, le plâtre, le béton, le fibrociment, le verre.

Enfin, un dernier objet concerne un substrat revêtu par au moins une couche dudit revêtement résultant de l'utilisation d'au moins une dispersion, ou une composition de dispersions, ou une composition de revêtement selon la présente invention.

A titre d'illustration de l'invention, les exemples suivants démontrent sans aucune limitation, les performances des dispersions et des revêtements obtenus.

### I/ / Matières premières

### a) Matières premières entrant dans la composition des dispersions aqueuses

**Tableau I :**

| **Composé** | **Nature chimique** | **Fournisseur** |
|---|---|---|
| **Monomères** | | |
| ABU | Acrylate de butyle (Tg = -54°C) | Arkema |
| MAM | Méthacrylate de méthyle (Tg = 105°C) | Arkema |
| ST | Styrène (Tg = 100°C) | Total |
| AMA | Acide méthacrylique (Tg = 228°C) | Arkema |
| Norsocryl^{®} 102 | 2-(2-oxo imidazolidin-1-yl)éthyl méthacrylate (Tg = 47°C) en solution dans le MAM (25/75) | Arkema |
| AM | Acrylamide (Tg = 165°C) | Aldrich |
| DAA | Diacétone acrylamide (Tg = 77°C) | Aldrich |
| Méthacrylate d'allyle | Méthacrylate d'allyle (Tg = 4°C) | Arkema |
| | | |

| **Tensioactifs** | | |
|---|---|---|
| Rhodafac RS 610 à 25% | Ester de phosphate d'alcool gras en C₁₃ éthoxylé à 6 OE | Rhodia |
| Disponil FES 32 à 30% | Sulfate de sodium d'alcool gras en C₁₂-C₁₄ éthoxylé à 6 OE | Cognis |
| Disponil FES 77 à 32% | Sulfate de sodium d'alcool gras en C₁₂-C₁₄ éthoxylé à 30 OE | Cognis |
| Aerosol OT75 | Dioctyl sulfosuccinate de sodium | Cytec |
| Texapon K12 | Lauryl sulfate de sodium | Cognis |
| Disponil A 3065 à 65% | Alcool gras en C₁₂-C₁₄ éthoxylé à 30 OE | Cognis |
| | | |

| **Agents de transfert** | | |
|---|---|---|
| n-ddm | n-dodécylmercaptan | Aldrich |
| MAA | Acide mercapto-acétique | Aldrich |
| | | |

| **Amorceurs** | | |
|---|---|---|
| TBHP à 70% | Ter-Butyl HydroPeroxyde | Arkema |
| Persulfate de sodium | Persulfate de sodium | Aldrich |
| | | |

| **Réducteurs** | | |
|---|---|---|
| SFS | Formaldéhyde sulfoxylate de sodium | Aldrich |
| Métabisulfite de sodium | Métabisulfite de sodium | Aldrich |
| Bruggolite FF6 | Sel de sodium d'un dérivé de l'acide sulfinique | Bruggman |
| | | |

| **Agent co-réactif** | | |
|---|---|---|
| AADH | Acide adipique bis-hydrazide | Aldrich |
| | | |

| **Base de neutralisation** | | |
|---|---|---|
| NH₄OH à 20% | Hydroxyde d'ammonium | Aldrich |

Les valeurs des Tg des homopolymères correspondants aux différents monomères, pris en considération pour le calcul des Tg1 et Tg2 selon la relation de Fox, sont disponibles sur les fiches techniques fournisseurs ou dans le Polymer Handbook, 4ème édition, de J. Brandrup, E. H. Immergut, E. A. Grulke.

### b) Matières premières entrant dans la formulation des peintures

**Tableau II :**

| **Constituant** | **Fonction** | **Nature chimique** | **Fournisseur** |
|---|---|---|---|
| Acticide MBS | Biocide | Solution aqueuse de méthylisothiazoline (MIT) et de benzisothiazolinone (BIT) | Thor |
| Propylèneglycol | Solvant | - | Acros |
| AMP 90 | Agent neutralisant | 2-amino-2-methyl-1-propanol | Angus Chemie |
| Disperbyk 190 | Dispersant | Copolymère bloqué à haute masse moléculaire | Byk Chemie |
| Tiona 595 | Pigment | Dioxyde de titane | Millenium |
| Byk 024 | Antimousse | Mélange de polysiloxanes dans un polyglycol et de particules solides hydrophobes | Byk Chemie |
| Aquaflow NHS 300 | Epaississant | Polyéther polyacétal modifié hydrophobiquement | Hercules Aqualon |
| Tego Foamex 7447 | Antimousse | Emulsion d'un copolymère polyéther siloxane, sans silice | Degussa |
| Surfynol MD-20 | Antimousse | Antimousse non siliconé (type tensioactif Gemini) | Air Products |
| Ammoniaque | Agent neutralisant | - | VWR |
| Additol VXW 6206 | Siccatif | Combinaison de carboxylates de Cobalt, Lithium et Zirconium | Cytec Surface Specialties |
| Acrysol RM-8 W | Epaississant | Epaississant HEUR (URéthane d'oxyde d'Ethylène modifié Hydrophobiquement) | Rohm & Haas |
| Synaqua 2080 | Emulsion alkyde | - | Cray Valley |

### II/ Méthodes de tests

### 1- Méthodes de tests pour l'évaluation des dispersions aqueuses

### a) Coagulum ou taux de grains résiduels

Le coagulum ou taux de grains résiduels des dispersions aqueuses est mesuré selon la norme ISO 4576:1996.

### b) Taux d'accrochage

Les dépôts de polymère situés sous le niveau de la dispersion aqueuse, retenus sur l'ancre, les gaines de température, les contre-pâles ou les parois du réacteur sont récupérés, lavés à l'eau puis séchés dans une étuve ventilée à 105°C jusqu'à poids constant (pendant environ 2 heures).

### c) Extrait sec (ES)

L'extrait sec des dispersions aqueuses est mesuré selon la norme ISO 3251.

### d) pH

Le pH des dispersions aqueuses est mesuré selon la norme ISO 976.

### e) Viscosité

La viscosité des dispersions aqueuses est mesurée selon la norme ISO 2555.

### f) Taille des particules

La taille des particules est mesurée par Spectroscopie de Corrélation de Photons (PCS), à l'aide d'un appareillage N4+ de Beckman Coulter. L'échantillon est dilué (3 à 5 gouttes d'émulsion dans 50 ml d'eau) dans une cuve en polystyrène à l'aide d'eau déionisée sur un filtre en acétate de cellulose de 0,22 µm. La taille des particules est mesurée à une température de 25°C, sous un angle de mesure de 90° et à une longueur d'onde du laser de 633 nm.

### g) Température minimale de formation de film (TMF)

La TMF des dispersions aqueuses est mesurée selon la norme ISO 2115.

### h) Performances mécaniques

### Résistance à la traction :

Les essais de résistance à la traction ont été réalisés sur une machine à traction MTS 1MH, à une température de 23°C et à 50% d'humidité relative (HR), et avec une cellule à 50 N.

La vitesse de l'essai est de 5 mm/min.

### Test DMTA (Dynamic Mechanical Thermal Analysis) :

Les essais mécaniques sont réalisés sur un appareil Rheometrics RSAII, en traction. Le balayage en température se fait de -50 à 200°C. La rampe de montée en température est de 3°C/min et la fréquence de 1 Hz.

Pour obtenir les films, les émulsions ont été appliquées sur des plaques de polypropylène (épaisseur finale du film : environ 100 µm), puis séchées pendant 7 jours à 23°C et 50% HR. Deux gouttes d'un agent mouillant (Zonyl FSJ) ont été ajoutées à 20 g d'émulsion, et la surface des plaques de polypropylène a été légèrement poncée avant la filmification pour éviter tout démouillage.

La température de transition thermomécanique est définie comme étant la température à laquelle tan δ = E"/ E' présente un maximum, avec :
E' : module élastique,
E" : module visqueux,
tan δ : facteur de perte.

### 2- Méthodes de tests pour l'évaluation des formulations de peinture

### a) Viscosité

Les viscosités des peintures sont mesurées à l'aide d'un viscosimètre à haut gradient de cisaillement CAP 1000 à 25°C et à 10000 s⁻¹ (selon la norme ISO 2884), et à l'aide d'un viscosimètre Brookfield à bas gradient de cisaillement, à 10 rpm (selon la norme ISO 2555).

### b) pH

Le pH des formulations de peinture est mesuré selon la norme ISO 976.

### c) Brillant

Les mesures sont effectuées à l'aide d'un brillancemètre « Micro-TRI-gloss » de BYK Gardner GmbH sous des angles de 20° et 60°, après 24 heures de séchage à 23°C ± 1°C et à 50% ± 5% HR, sur des films de dispersions aqueuses non formulés de 150 µm déposés sur des cartes Leneta 2A et sur des films de peinture de 200 µm déposés sur plaques de verre, selon la norme ISO 2813.

### d) Colorimétrie / Opacité

Les mesures sont effectuées à l'aide d'un spectrocolorimètre Minolta CM-2600d, sur des films humides de 150 µm d'épaisseur déposés sur des cartes Leneta 2A, après 24 heures de séchage à 23°C ± 1°C et à 50% ± 5% HR.

L'indice Bi de blancheur est défini selon la norme ASTM E313-96.

### e) Dureté

La dureté est évaluée à l'aide d'un pendule de dureté Persoz sur des films humides de 100 µm appliqués sur plaques de verre, après 14 jours de séchage (à 23°C ± 1°C et à 50% ± 5% HR), selon la norme ISO 1522.

### f) Résistance au blocking

Les peintures à évaluer sont appliquées sur deux cartes Leneta 2A à une épaisseur choisie, à l'aide d'un filmographe. Ces peintures sont stockées dans une salle climatisée (à 23°C ± 1°C et à 50% ± 5% HR) pendant un temps déterminé. Les faces peintes de ces cartes sont ensuite placées face à face entre 2 plaques de verre. L'ensemble est pressé par une masse permettant d'obtenir une pression de 50 g/cm² sur toute la surface d'essai. Les faces peintes sont laissées en contact en salle climatisée, pendant un temps déterminé. A la fin du temps de contact, les cartes sont séparées délicatement en tirant sur les 2 cartes, dans toutes les directions.

Les dommages occasionnés sur les films de peinture sont alors quantifiés sur une échelle variant de 0 à 8 :

**Tableau III :**

| | |
|---|---|
| **0** | Aucune adhérence entre les films et aucun bruit lors de la séparation des cartes |
| **1** | Détachement des films avec un léger bruit, mais sans altération de la surface d'essai |
| **2** | Arrachement < à 10 points sur la surface d'essai |
| **3** | Arrachement < à 50 points sur la surface d'essai |
| **4** | Arrachement > à 50 points sur la surface d'essai |
| **5** | Arrachement de la surface < à 20% de la surface d'essai |
| **6** | Arrachement de la surface entre 20 et 50% de la surface d'essai |
| **7** | Arrachement de la surface > à 50% de la surface d'essai |
| **8** | Arrachement total de la surface d'essai |

Les épaisseurs, temps de séchage et temps de contact choisis sont les suivants :
200 µm humide / 24 heures de temps de séchage à 23°C ± 1°C, 50% + 5% HR / 24 heures de temps de contact à 23°C ± 1°C, 50% ± 5% HR.

### g) Résistance à l'eau

Des films humides de 200 µm sont appliqués sur des plaques de verre, puis séchés pendant 7 jours en salle climatisée (23°C +/- 1°C et 50% +/- 5% HR).

Des gouttes d'eau sont ensuite déposées pendant un temps déterminé (15 minutes, 30 minutes, 1 heure, 2 heures, 8 heures et 24 heures) à la surface des films de peinture, et les dommages causés sont évalués, avant séchage et après 24 heures de séchage, sur une échelle variant de 0 à 4 :

**Tableau IV :**

| | |
|---|---|
| **0** | Destruction partielle ou totale du film de peinture |
| **1** | Cloquage intense du film de peinture |
| **2** | Cloquage du film de peinture visible à l'oeil nu |
| **3** | Trace à peine visible à l'oeil nu (micro-cloquage, gonflement, etc...) |
| **4** | Pas d'altération du film de peinture |

### h) Test de flexibilité (EGC)

Deux couches de peintures (séchage intercouche de 24 heures) sont déposées avec un rendement de 10 m²/L sur une cornière en pin de 12 cm de longueur suivant le schéma ci-dessous.

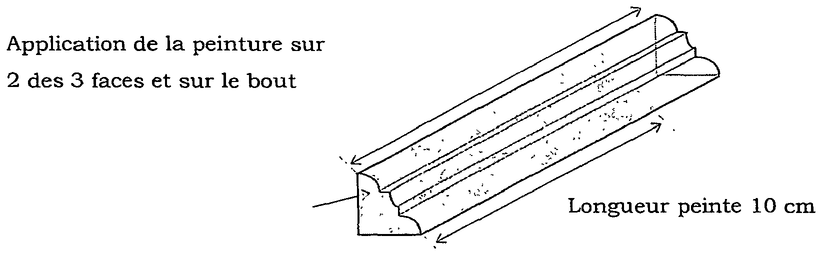

Après une semaine de séchage en salle climatisée (à 23°C +/- 1°C et 50% +/- 5% RH), les éprouvettes sont soumises à 5 cycles de gel/dégel (gel : 16 heures d'immersion dans l'eau dans un congélateur à -20°C / dégel : 8 heures en salle climatisée après retrait de la glace formée sous l'eau courante).

Les défauts de surface (fissuration / cloquage) sont notés à chaque fin de cycle sur une échelle variant de 0 à 10 :

**Tableau V :**

| **Fissuration** | | **Cloquage** | | |
|---|---|---|---|---|
| **Note** | **Densité** | **Note** | **Densité** | **Taille moyenne** |
| 10 | Aucune fissuration | 5 | Aucune | Aucun cloquage |
| 8 | Léger | 4 | < 2 cloques | < 2 mm |
| 6 | Moyen | 3 | < 5 cloques | < 5 mm |
| 4 | Prononcé | 2 | < 7 cloques | < 7 mm |
| 2 | Sévère | 1 | < 10 cloques | < 10 mm |
| 0 | Totale | 0 | > 10 cloques | 10 mm |

La note correspondant au cloquage correspond à la note de la densité + la note de la taille moyenne de cloquage.

### III/ / Composition et mise en oeuvre des dispersions aqueuses

La préparation des dispersions aqueuses de polymère est réalisée dans un réacteur à double enveloppe de 3L agité, régulé et équipé d'un dispositif de reflux.

Les mélanges de monomères et les solutions de catalyseurs et de réducteurs sont ajoutés en continu, avec contrôle des débits, par pompes doseuses.

### Exemple 1 (selon l'invention) :

Le premier mélange de monomères 1 correspond à la phase P1 (cf. tableau VI).

Le second mélange de monomères 2 correspond à la phase P2 (cf. tableau VI).

Une solution aqueuse d'amorceur est préparée en utilisant 0,568 parties en poids de TBHP.

Une solution aqueuse de réducteur est préparée en utilisant 0,613 parties en poids de SFS.

En pied de cuve (PDC), on introduit à 23°C les quantités décrites dans le tableau VI, puis on chauffe à 65°C et on introduit 8,5% en poids de P1, suivi de 8,2% de la solution de réducteur et de 8,8% de la solution d'amorceur (cf. tableau VI).

On laisse pré-polymériser environ 5 minutes, et on introduit le restant de P1 (91,5%), 36% de la solution de réducteur et 37,5% de la solution d'amorceur en 4,5 heures, en maintenant à la même température.

L'introduction de P1 terminée, 6,3% de la solution d'amorceur est introduite en 45 minutes et 8% de la solution de réducteur est introduite en 1 heure, à la même température.

Après contrôle d'une conversion effective de 98%, 20% de P2 sont introduits en 5 minutes à 60°C. Le restant de P2 est ensuite introduit en environ 1,5-2 heures à 60°C. Simultanément, 33,3% de la solution d'amorceur et 28,7% de la solution de réducteur sont également introduits.

L'introduction de P2 terminée, 4,1% de la solution de réducteur est coulée en 15 minutes à 60°C.

Après 15 minutes, le restant de la solution d'amorceur (14,2%) est introduit en 45 minutes et le restant de la solution de réducteur (15,1%) en 1 heure, à la même température, pour faire réagir les derniers monomères.

Le produit est ensuite neutralisé à froid à 23°C par l'ammoniac, à un pH final de 8.

Le diamètre moyen des particules est égal à 104 nm.

Par mesure de l'extrait sec par voie thermogravimétrique, on confirme un taux de conversion effectif supérieur à 98%.

### Exemple 2 (comparatif) :

Par rapport à l'exemple 1 : changement de la nature du tensioactif avec utilisation d'un sulfate de sodium d'alcool gras éthoxylé à 6 OE (Disponil FES 32), à la place du tensioactif anionique phosphaté (Rhodafac RS 610).

Le même procédé que celui de l'exemple 1 est utilisé avec les quantités correspondantes à l'exemple 2 (cf. tableau VI).

### Exemple 3 (comparatif) :

Par rapport à l'exemple 1 : changement de la nature du tensioactif avec utilisation d'un sulfate de sodium d'alcool gras éthoxylé à 30 OE (Disponil FES 77), à la place du tensioactif anionique phosphaté (Rhodafac RS 610).

Le même procédé que celui de l'exemple 1 est utilisé avec les quantités correspondantes à l'exemple 3 (cf. tableau VI).

On observe une floculation à la fin de la polymérisation. Le produit est inutilisable pour une composition de revêtement.

### Exemple 4 (comparatif) :

Par rapport à l'exemple 1 : changement de la nature du tensioactif avec utilisation d'un sodium dioctyl sulfosuccinate (Aerosol OT75), à la place du tensioactif anionique phosphaté (Rhodafac RS 610).

Le même procédé que celui de l'exemple 1 est utilisé avec les quantités correspondantes à l'exemple 4 (cf. tableau VI).

On observe une floculation à la fin de la polymérisation. Le produit est inutilisable pour une composition de revêtement.

### Exemple 5 (comparatif) :

Par rapport à l'exemple 1 : changement de la nature du tensioactif avec utilisation d'un sodium lauryl sulfate (Texapon K12), à la place du tensioactif anionique phosphaté (Rhodafac RS 610).

Le même procédé que celui de l'exemple 1 est utilisé avec les quantités correspondantes à l'exemple 5 (cf. tableau VI).

### Exemple 6 (selon l'invention) :

Variation du rapport P1/P2 : 80/20.

Le même procédé que celui de l'exemple 1 est utilisé avec les quantités correspondantes à l'exemple 6 (cf. tableau VI).

### Exemple 7 (comparatif) :

Variation du rapport P1/P2 : 50/50.

Le même procédé que celui de l'exemple 1 est utilisé avec les quantités correspondantes à l'exemple 7 (cf. tableau VI).

### Exemple 8 (selon l'invention) :

On mélange la dispersion de l'exemple 1 avec une dispersion d'alkyde commerciale, la Synaqua 2080, dans un rapport 50/50 en poids.

### Exemple 9 selon l'invention) :

On opère dans un réacteur de 3L à double enveloppe, agité, comprenant un réfrigérant et un système de régulation de la température.

Le premier mélange de monomères correspond à la phase P1 (cf. tableau IX).

Le second mélange de monomères correspond à la phase P2 (cf. tableau IX).

La solution aqueuse d'amorceur à 13% est préparée en utilisant 0,532 parties en poids de TBHP.

La solution aqueuse de réducteur à 4% est préparée en utilisant 0,564 parties en poids de SFS.

Une pré-polymérisation (ou ensemencement) est réalisée à 65°C en pied de cuve pendant environ 5 minutes, en introduisant les quantités décrites dans le tableau IX (charge initiale), avec environ 9% de la solution de réducteur, et environ 9% de la solution d'amorceur (cf. tableau IX). Ensuite, on introduit le restant de P1 avec environ 40% de la solution de réducteur et environ 40% de la solution d'amorceur pendant 4,5 heures, toujours à la même température. La polymérisation est poursuivie pendant encore 30 minutes à la même température, pour un taux de conversion d'environ 97%. Le mélange correspondant aux monomères de P2 est ensuite ajouté en environ 1,5-2 heures avec environ 36% de la solution d'amorceur et 31% de la solution de réducteur. A la fin de l'introduction de P2, la température est maintenue à 60°C pendant 30 minutes, puis le reste des solutions d'amorceur et de réducteur est ajouté en environ 60-75 minutes.

Le produit est ensuite neutralisé à 23°C à l'ammoniac jusqu'à un pH final de 8 environ.

Le taux de conversion global final est supérieur à 98%.

La taille moyenne des particules est égale à 105 nm, la TMF < 0°C, le taux d'accrochage est de 0,08% et le taux de grains est de 40 ppm.

### Exemple 10 (comparatif) :

On reproduit le même mode opératoire que pour l'Exemple 9, à l'exception de la modification du rapport des phases P1 et P2 (cf. tableau IX). En conséquence de cette modification, le rapport monomères / catalyseurs est maintenu identique (constant) par ajustement de la quantité de catalyseurs par rapport à celle des monomères, et le débit d'alimentation est gardé constant en ajustant les temps de coulée proportionnellement aux quantités utilisées (alimentées).

La taille moyenne des particules est de 96 nm et la TMF < 0°C, le taux d'accrochage est de 0,8% et le taux de grains est de 80 ppm.

### Exemple 11 (comparatif) :

On reproduit le même mode opératoire que pour l'Exemple 9, à l'exception de la modification du rapport des phases P1 et P2 (cf. tableau IX). En conséquence de cette modification, le rapport monomères / catalyseurs est maintenu identique (constant) par ajustement de la quantité de catalyseurs par rapport à celle des monomères, et le débit d'alimentation est gardé constant en ajustant les temps de coulée proportionnellement aux quantités utilisées (alimentées).

Cette dispersion aqueuse a floculé au cours de la seconde étape de polymérisation (augmentation de la taille des particules et apparition de blocs de polymère). De ce fait, la caractérisation et l'évaluation de cette dispersion n'a pas pu être réalisée.

### Exemple 12 (selon l'invention) :

On opère dans un réacteur de 10L à double enveloppe, agité à 100 tours/min, comprenant un réfrigérant et un système de régulation de la température.

Le premier mélange de monomères correspond à la phase P1 (cf. tableau XI).

Le second mélange de monomères correspond à la phase P2 (cf. tableau XI).

Une solution aqueuse de persulfate de sodium à 5% est préparée.

Une solution aqueuse de TBHP à 13% est préparée.

Une solution aqueuse de métabisulfite de sodium à 10% est préparée.

Une solution aqueuse de Bruggolite FF6 à 5% est préparée.

En pied de cuve, on introduit à 23°C les quantités décrites dans le tableau XI. Ensuite, on chauffe le mélange jusqu'à une température de 80°C, et on introduit en batch 4,4% en poids de P1, puis 55,2% en poids de la solution de persulfate de sodium à 5%.

Après 7 minutes d'attente, on introduit le restant de P1 (95,6% en poids) avec 19,2% de la solution de persulfate de sodium à 5% pendant 4,5 heures, toujours à la même température.

Une fois l'introduction de P1 terminée, 3,2% en poids de la solution de persulfate de sodium sont ajoutés en 45 minutes, toujours à la même température. Le milieu réactionnel est ensuite refroidi à 65°C.

Après un contrôle du taux de conversion d'environ 98%, 20% du mélange correspondant aux monomères P2 sont introduits en 5 minutes, à une température de 65°C.

Après 5 minutes d'attente, le restant de P2 est ensuite ajouté en environ 1 heure et 45 minutes, à une température de 65°C. Simultanément, 22,4% en poids de la solution de persulfate de sodium à 5% et la totalité de la solution de métabisulfite de sodium à 10% sont également introduits en 1 heure et 45 minutes.

A la fin de l'introduction de P2, le milieu réactionnel est refroidi à une température de 55°C, puis la solution de TBHP à 13% est introduite en 60 minutes et la solution de Bruggolite FF6 à 5% est introduite en 75 minutes. Une fois ces introductions terminées, le milieu réactionnel est refroidi à une température de 40°C, puis l'AADH est ajouté.

Le produit est ensuite déchargé du réacteur, puis neutralisé à froid à l'ammoniac jusqu'à un pH final de 7,5.

La taille moyenne des particules est égale à 140 nm.

Par mesure de l'extrait sec par voie thermogravimétrique, on confirme un taux de conversion effectif supérieur à 98%.

Le taux d'accrochage est de 0,08% et le taux de grains est de 130 ppm.

### Exemple 13 (selon l'invention) :

On opère dans un réacteur de 10L à double enveloppe, agité à 100 tours/min, comprenant un réfrigérant et un système de régulation de la température.

Le premier mélange de monomères correspond à la phase P1 (cf. tableau XI).

Le second mélange de monomères correspond à la phase P2 (cf. tableau XI).

Une solution aqueuse de persulfate de sodium à 3% est préparée.

Une solution aqueuse de TBHP à 13% est préparée.

Une solution aqueuse de Bruggolite FF6 à 5% est préparée.

En pied de cuve, on introduit à 23°C les quantités décrites dans le tableau XI. Ensuite, on chauffe le mélange jusqu'à une température de 80°C, et on introduit en batch 4,4% en poids de P1, puis la totalité de la solution de persulfate de sodium à 3%.

Après 7 minutes d'attente, on introduit le restant de P1 (95,6% en poids) en 4,5 heures, toujours à la même température.

Une fois l'introduction de P1 terminée, une cuisson thermique est réalisée à une température de 80°C, pendant 45 minutes.

Le milieu réactionnel est ensuite refroidi à 65°C.

Après un contrôle du taux de conversion d'environ 98%, 20% du mélange correspondant aux monomères P2 sont introduits en 5 minutes, à une température de 65°C.

Après 5 minutes d'attente, le restant de P2 est ensuite ajouté en environ 1 heure et 45 minutes, à une température de 65°C. Simultanément, 50% en poids de la solution de TBHP à 13% et 50% de la solution de Bruggolite FF6 à 5% sont également introduits en 1 heure et 45 minutes.

A la fin de l'introduction de P2, le milieu réactionnel est refroidi à une température de 55°C, et le restant de la solution de TBHP à 13% est introduit en 60 minutes, et le restant de la solution de Bruggolite FF6 à 5% est introduit en 75 minutes.

Une fois ces introductions terminées, le milieu réactionnel est refroidi à une température de 40°C, puis l'AADH est ajouté.

Le produit est ensuite déchargé du réacteur, puis neutralisé à froid à l'ammoniac jusqu'à un pH final de 7,4.

La taille moyenne des particules est égale à 130 nm.

Par mesure de l'extrait sec par voie thermogravimétrique, on confirme un taux de conversion effectif supérieur à 98%.

Le taux d'accrochage est inférieur à 0,01% et le taux de grains est de 180 ppm.

**Tableau VI : valeurs exprimées en parties en poids par rapport à 100 parties en poids de monomères purs (les valeurs sont toutes exprimées en parts de matière sèche)**

| | **Ex. 1** | | **Ex.2** | | **Ex. 3** | | **Ex. 4** | | **Ex. 5** | | **Ex. 6** | | **Ex. 7** | |
|---|---|---|---|---|---|---|---|---|---|---|---|---|---|---|
| | **PDC** | | **PDC** | | **PDC** | | **PDC** | | **PDC** | | **PDC** | | **PDC** | |
| Eau déionisée | 60 | | 60 | | 60 | | 60 | | 60 | | 60 | | 57 | |
| Rhodafac RS 610 | 0,5 | | | | | | | | | | 0,5 | | 0,5 | |
| Disponil FES 32 | | | 0,5 | | | | | | | | | | | |
| Disponil FES 77 | | | | | 0,5 | | | | | | | | | |
| Aerosol OT75 | | | | | | | 0,5 | | | | | | | |
| Texapon K12 | | | | | | | | | 0,5 | | | | | |

| | **P1** | **P2** | **P1** | **P2** | **P1** | **P2** | **P1** | **P2** | **P1** | **P2** | **P1** | **P2** | **P1** | **P2** |
|---|---|---|---|---|---|---|---|---|---|---|---|---|---|---|
| Eau déionisée | 35 | | 35 | | 35 | | 35 | | 35 | | 35 | | 10,3 | 11,7 |
| Rhodafac RS 610 | 1,5 | | | | | | | | | | 1,5 | | 0,92 | 0,6 |
| Disponil FES 32 | | | 1,5 | | | | | | | | | | | |
| Disponil FES 77 | | | | | 1,5 | | | | | | | | | |
| Aerosol OT75 | | | | | | | 1,5 | | | | | | | |
| Texapon K12 | | | | | | | | | 1,5 | | | | | |
| Disponil A 3065 | 0,6 | | 0,6 | | 0,6 | | 0,6 | | 0,6 | | 0,6 | | 0,37 | 0,23 |
| ABU | 56 | | 56 | | 56 | | 56 | | 56 | | 54,7 | | 34,15 | |
| MAM | | 13,5 | | 13,5 | | 13,5 | | 13,5 | | 13,5 | | 15 | | 37,5 |
| ST | 20,6 | 2,5 | 20,6 | 2,5 | 20,6 | 2,5 | 20,6 | 2,5 | 20,6 | 2,5 | 20,1 | 2,7 | 12,56 | 6,94 |
| AMA | 1 | 2 | 1 | 2 | 1 | 2 | 1 | 2 | 1 | 2 | 0,97 | 2,27 | 0,61 | 5,56 |
| Norsocryl^{®} 102 | 4 | | 4 | | 4 | | 4 | | 4 | | 3,9 | | 2,44 | |
| AM | 0,4 | | 0,4 | | 0,4 | | 0,4 | | 0,4 | | 0,39 | | 0,24 | |
| n-ddm | 0,1 | | 0,1 | | 0,1 | | 0,1 | | 0,1 | | 0,15 | | 0,06 | |
| TBHP | 0,568 | | 0,568 | | 0,568 | | 0,568 | | 0,568 | | 0,568 | | 0,568 | |
| SFS | 0,613 | | 0,613 | | 0,613 | | 0,613 | | 0,613 | | 0,613 | | 0,613 | |

| | | | | | | | | | | | | | | |
|---|---|---|---|---|---|---|---|---|---|---|---|---|---|---|
| NH₄OH | 0,29 | | 0,29 | | 0,29 | | 0,29 | | 0,29 | | 0,29 | | 0,29 | |
| Eau déionisée | 24 | | 24 | | 24 | | 24 | | 24 | | 24 | | 24 | |
| | **P1** | **P2** | **P1** | **P2** | **P1** | **P2** | **P1** | **P2** | **P1** | **P2** | **P1** | **P2** | **P1** | **P2** |
| **Total** | 82 | 18 | 82 | 18 | 82 | 18 | 82 | 18 | 82 | 18 | 80 | 20 | 50 | 50 |
| **Tg calculées en °C (selon relation de Fox)** | -21 | 115 | -21 | 115 | -21 | 115 | -21 | 115 | -21 | 115 | -21 | 114 | -21 | 114 |

**Tableau VII : caractéristiques**

| | **Ex. 1** | **Ex. 2** | **Ex. 3** | **Ex. 4** | **Ex. 5** | **Ex. 6** | **Ex. 7** |
|---|---|---|---|---|---|---|---|
| Coagulum (ppm) | 27 | 210 | Floculation pendant le Red/Ox | Floculation pendant le Red/Ox | 65 | 50 | 700 |
| Accrochage (%) | 0,01 | 0,2 | | | 0,01 | 0,01 | 0,01 |
| ES (%) | 46,2 | 46,8 | | | 46,1 | 46,3 | 48,9 |
| pH | 8,2 | 8,1 | | | 8,5 | 8,2 | 8,1 |
| Viscosité (mPa.s) | 1130 | 8620 | | | 19200 | 980 | 6980 |
| Mobile | 2 | 4 | | | 6 | 2 | 4 |
| Taille des particules (nm) | 104 | 107 | | | 77 | 106 | 128 |
| TMF (°C) | 0 | 0 | | | 0 | 0 | 75 |

**Tableau VIII : performances mécaniques**

| | | **Ex. 1** | **Ex. 2** | **Ex. 3** | **Ex. 4** | **Ex. 5** | **Ex. 6** | **Ex. 7** |
|---|---|---|---|---|---|---|---|---|
| Test DMTA | Tα1 (°C) | 3 | 16 | Floculation pendant le Red/Ox | Floculation pendant le Red/Ox | 3 | 1 | Pas de formation de film : TMF trop élevée |
| | Tα2 (°C) | 102 | 123 | | | 110 | 113 | |
| | Tan δ1 Tan | 0,35 δ1 max 0,35 | 0,22 | | | 0,28 | 0,32 0,28 0,32 | |
| | Tan δ2 max | 0,77 | 0,87 | | | 0,67 | 0,92 | |
| Résistance à la traction | Allongement à la rupture (%) | 372 | 167 | | | 216 | 324 | |
| | Contrainte à la rupture (MPa) | 3,9 | 9,1 | | | 4,8 | 3,8 | |
| | Module d'Young (MPa) | 96 | 258 | | | 164 | 134 | |

**Tableau IX : valeurs exprimées en parties en poids par rapport à 100 parties en poids de monomères purs (toutes les valeurs sont exprimées en parts de matière sèche)**

| | | **Ex. 9** | **Ex. 10** | **Ex. 11** |
|---|---|---|---|---|
| | **P1/P2** | 82/18 | 95/5 | 60/40 |
| **Charge initiale** | Eau | 60 | 60 | 60 |
| | Rhodafac RS 610 P1 | 0,5 6,9 | 0,5 6,9 | 0,5 6,9 |
| **Ensemencement** | TBHP | 0,05 | 0,05 | 0,05 |
| | SFS | 0,05 | 0,05 | 0,05 |
| **Alimentation** | TBHP | 0,21 | 0,25 | 0,15 |
| | SFS | 0,22 | 0,26 | 0,16 |
| **P1** | Eau | 35 | 40,6 | 25,6 |
| | Rhodafac RS 610 | 1,5 | 1,74 | 1,1 |
| | Disponil A3065 | 0,6 | 0,7 | 0,4 |
| | | | | |
| | ABU | 56 | 64,88 | 40,98 |
| | ST | 20,6 | 23,86 | 15,07 |
| | AMA | 1 | 1,16 | 0,73 |
| | AM | 0,4 | 0,46 | 0,29 |
| | Norsocryl^{®} 102 | 4 | 4,63 | 2,93 |
| | n-dodécylmercaptan | 0,1 | 0,12 | 0,07 |
| | | | | |
| | **Tg Fox P1 (°C) *** | **-20,6** | **-20,6** | **-20,6** |
| **Alimentation** | TBHP | 0,19 | 0,02 | 0,48 |
| | SFS | 0,18 | 0,02 | 0,44 |
| | | | | |
| **P2** | MAM | 13,5 | 3,75 | 30 |
| | ST | 2,5 | 0,69 | 5,56 |
| | AMA | 2 | 0,56 | 4,44 |
| | | | | |
| | **Tg Fox P2 (°C) *** | **114,9** | **114,9** | **114,9** |

**Tableau X : performances mécaniques**

| | | **DMTA** | | | **Traction** | | |
|---|---|---|---|---|---|---|---|
| | TMF (°C) | Tα (°C) | tan δ | Module élastique E' 23°C (Pa) | Allongement à la rupture (%) | Contrainte à la rupture (MPa) | Module d'Young (MPa) |
| **Ex. 9** (selon l'invention) (18% phase dure) | < 0 | 3 10 8 | 0,34 0,80 | 1,55 x10⁸ | 431 | 4,6 | 92 |
| **Ex. 10*** (comparatif) (5% phase dure) | < 0 | 9 | 1,29 | 3,82 x10⁶ | 1014 | 1,1 | 0,27 |
| **Ex. 11**** (comparatif) (40 % phase dure) | - | - | - | - | - | - | - |

| | | | | | | | |
|---|---|---|---|---|---|---|---|
| * Ex. 10 : collant important, absence de tenue mécanique ** Ex. 11 : instable et floculant au cours de la polymérisation (non-faisable et donc pas de possibilité d'évaluation) | | | | | | | |

**Tableau XI : valeurs exprimées en parties en poids par rapport à 100 parties en poids de monomères purs (toutes les valeurs sont exprimées en parts de matière sèche)**

| | **Ex. 12** | | **Ex.13** | |
|---|---|---|---|---|
| | **PDC** | | **PDC** | |
| Eau déionisée | 60 | | 60 | |
| Disponil FES 32 | 0,9 | | 0,9 | |

| | **P1** | **P2** | **P1** | **P2** |
|---|---|---|---|---|
| Eau déionisée | 35 | | 35 | |
| Rhodafac RS 610 | 1 | | 1 | |
| Disponil A3065 | 0,6 | | 0,6 | |
| ABU | 55 | | 54,9 | |
| MAM | | 13,5 | 24,5 | 16 |
| ST | 22,6 | 2,5 | | |
| AMA | 1 | 2 | | 2 |
| DAA | 3 | | 2 | |
| AM | 0,4 | | 0,4 | |
| Méthacrylate d'allyle | | | 0,2 | |
| n-ddm | 0,1 | | 0,1 | |
| MAA | 0,25 | | 0,25 | |
| | | | | |
| Persulfate de sodium | 0,45 | | 0,248 | |
| TBHP | 0,1 | | 0,15 | |
| | | | | |
| Métabisulfite de sodium | 0,1 | | | |
| Bruggolite FF6 | 0,1 | | 0,15 | |
| | | | | |
| AADH | 1,24 | | 0,82 | |
| NH₄O | 0,47 | | 0,376 | |
| Eau déionisée | 20,25 | | 20,25 | |

| | **P1** | **P2** | **P1** | **P2** |
|---|---|---|---|---|
| **Total** | 82 | 18 | 82 | 18 |
| **Tg calculées en °C (selon relation de Fox)** | -19 | 115 | -19 | 115 |

**Tableau XII : performances mécaniques**

| | | **DMTA** | | | **Traction** | | |
|---|---|---|---|---|---|---|---|
| | TMF (°C) | Tα1 Tα2 (°C) | tan δ1 tan δ2 | Module élastique E' 23°C (Pa) | Allongement à la rupture (%) | Contrainte à la rupture (MPa) | Module d'Young (MPa) |
| **Ex. 12** | 0 | 6 96 | 0,42 0,76 | 1,3 x10⁸ | 233 | 6,9 | 56,5 |
| **Ex. 13** | 0 | 0 95 | 0,37 0,67 | 9,4x10⁷ | 240 | 72,2 | 72,2 |

### IV/ Préparation des formulations de peintures à base des dispersions aqueuses

L'évaluation des performances des dispersions aqueuses décrites précédemment est effectuée sur des films appliqués à partir de formulations de peintures brillantes.

### Mode opératoire de formulation des peintures :

### Fabrication de la base de broyage :

On introduit dans un récipient successivement et sous agitation, l'eau et les différents constituants, à grande vitesse dans un disperseur Disperlux modèle 2075, jusqu'à une finesse < 10 µm.

### Fabrication de la peinture :

On introduit dans un récipient successivement et sous agitation, le ou les liants (ou l'émulsion alkyde siccative et/ou la dispersion aqueuse), la base de broyage précédemment préparée, l'eau et les différents constituants.

### Composition des formulations :

**Tableau XIII : composition des formulations de peintures des exemples 1 à 6**

| **Constituant** | **Fonction** | **Parties en poids (%)** |
|---|---|---|
| Eau | - | 4,00 |
| Acticide MBS | Biocide | 0,20 |
| Propylène glycol | Solvant | 2,00 |
| AMP 90 AMP 90 | Agent neutralisant | 0,10 |
| Disperbyk 190 | Dispersant | 0,72 |
| Tiona 595 | Pigment | 24,15 |
| Byk 024 | Antimousse | 0,15 |
| Dispersion aqueuse | - | 57,66 |
| **Total base de broyage** | | **88,98** |
| Eau | - | 8,92 |
| Aquaflow NHS 300 | Epaississant | 1,76 |
| Tego Foamex 7447 | Antimousse | 0,20 |
| Ammoniaque | Agent neutralisant | jusqu'à pH final > 8,5 |
| **Total peinture** | | **100** |

Caractéristiques des formulations (calculées grâce au logiciel de formulation « PV-FORMULA Version 2-3 » de Pierre Vergne - Inter Deposit Digital Number: IDDN.FR.001.280022.001.S.P.2001.000.30265) :
Concentration volumique pigmentaire : CPV = 19%
Extrait sec en poids = 52,3%
Extrait sec en volume = 40%
Densité : d = 1,26

**Tableau XIV : composition de la formulation de peinture de l'exemple 8 (émulsion alkyde seule)**

| **Constituant** | **Fonction** | **Parties en poids (%)** |
|---|---|---|
| Eau | - | 5,00 |
| Acticide MBS | Biocide | 0,20 |
| Disperbyk 190 | Dispersant | 0,65 |
| Tiona 595 | Pigment | 25,02 |
| Surfynol MD-20 | Antimousse | 0,20 |
| **Total base de broyage** | | **31,07** |
| Eau | - | 5,03 |
| Synaqua 2080 | Emulsion alkyde | 58,95 |
| Additol VXW 6206 | Siccatif | 0,45 |
| Aquaflow NHS 300 | Epaississant | 3,02 |
| Acrysol RM-8 W | Epaississant | 1,48 |
| **Total peinture** | | **100** |

Caractéristiques des formulations (calculées à l'aide du logiciel de formulation « PV-FORMULA Version 2-3 » tel que décrit précédemment) :
Concentration volumique pigmentaire : CPV = 19%
Extrait sec en poids = 55,8%
Extrait sec en volume = 42,9%
Densité : d = 1,29

**Tableau XV : composition de la formulation de peinture de l'exemple 8 (dispersion de l'exemple 1 + émulsion alkyde)**

| **Constituant** | **Fonction** | **Parties en poids (%)** |
|---|---|---|
| Eau | - | 5,09 |
| Acticide MBS | Biocide | 0,20 |
| Disperbyk 190 | Dispersant | 0,66 |
| Tiona 595 | Pigment | 25,42 |
| Surfynol MD-20 | Antimousse | 0,20 |
| **Total base de broyage** | | **31,57** |
| Eau | - | 5,72 |
| Synaqua 2080 | Emulsion alkyde | 29,95 |
| Additol VXW 6206 | Siccatif | 0,22 |
| Dispersion aqueuse | - | 30,35 |
| Aquaflow NHS 300 | Epaississant | 1,79 |
| Acrysol RM-8 W | Epaississant | 0,40 |
| **Total peinture** | | **100** |

Caractéristiques des formulations (calculées à l'aide du logiciel de formulation « PV-FORMULA Version 2-3 » tel que décrit précédemment) :
Concentration volumique pigmentaire : CPV = 19%
Extrait sec en poids = 55,7%
Extrait sec en volume = 43%
Densité : d = 1,29

### V/ Performances des films de peinture

L'épaisseur du film de peinture et son mode d'application varient suivant le test désiré.

Pour chaque mesure, se référer à la méthode de test correspondante au paragraphe II/.

**Tableau XVI :**

| | | | **Ex. 1** | **Ex. 2** | **Ex.3** | **Ex. 4** | **Ex. 5** | **Ex. 6** | **Ex. 7** | **Synaqua 2080** | **Ex. 8** |
|---|---|---|---|---|---|---|---|---|---|---|---|
| VOC (g/L) | sans H₂O | | 62 | 62 | Inutilisable | Inutilisable | 62 | 62 | Pas de formation de film : MF trop élevée | 3 | 1 |
| | avec H₂O | | 26 | 26 | | | 26 | 26 | | 1 | 1 |
| | Viscosité Brookfield à 10 rpm (mPa.s) | 1 jour | 5260 | 7960 | | | 12600 | 9600 | | 3240 | 7200 |
| | | 1 mois à Tambiante | 9200 | 10360 | | | 17960 | 13900 | | 3190 | 8400 |
| | | 1 mois à 50°C | 8440 | 21600 | | | 14680 | 16080 | | 2640 | 18640 |
| | Viscosité CAP 1000 à 25°C à 10000 s⁻¹ (mPa.s) | 1 jour | 148 | 177 | | | 166 | 183 | | 291 | 167 |
| | | 1 mois à Tambiante | 175 | 201 | | | 194 | 181 | | 249 | 170 |
| | | 1 mois à 50°C | 178 | 328 | | | 285 | 232 | | 221 | 201 |
| pH | Fin de la fabrication | | 8,7 | 8,6 | | | 8,8 | 8,7 | | 6,6 | 7,2 |

Les valeurs de VOC (en g/L) sont calculées grâce au logiciel de formulation « PV-FORMULA Version 2-3 » tel que décrit précédemment.

**Tableau XVII : performances des films de peinture**

| | | **Ex. 1** | **Ex. 2** | **Ex. 3** | **Ex. 4** | **Ex. 5** | **Ex. 6** | **Ex. 7** | **Synaqua 2080** | **Ex. 8** |
|---|---|---|---|---|---|---|---|---|---|---|
| Brillant à 20° / 60° | Dispersion aqueuse non formulée | 79/89 | 76/88 | Inutilisable | Inutilisable | 80/90 | 81/90 | Pas de formation de film : TMF trop élevée | 92/96 | 79/90 |
| | Film de peinture | 52/82 | 57/82 | | | 48/79 | 53/82 | | 89/98 | 63/88 |
| Colorimétrie / Opacité | Indice Bi (selon la norme ASTM E313-961 | 90,8 | 90,8 | | | 91,3 | 91,2 | | 74,9 | 88,2 |
| | Opacité (%) | 97.4 | 97,5 | | | 97,4 | 97,3 | | 96,2 | 97,8 |
| Dureté Persoz (s) | après 14 jours | 49 | 71 | | | 68 | 65 | | 170 | 110 |
| Résistance au blocking | après 24h de séchage + 24h de contact | 2 | 3 | | | 1 | 1 | | 8 | 4 |
| Résistance à l'eau avant séchage / après 24h de séchage | après 15 min | 3/4 | 3/4 | | | 3/4 | 3/4 | | 3/3 | 3/4 |
| | après 15 min | 3/4 | 3/4 | | | 3/4 | 3/4 | | 3/3 | 3/4 |
| | après 30 min | 3/4 | 3/4 | | | 3/4 | 3/4 | | 3/3 | 3/3 |
| | après 1 h | 3/4 | 2/3 | | | 2/4 | 3/4 | | 3/3 | 2/3 |
| | après 2h | 3/3 | 2/3 | | | 1/4 | 3/4 | | 3/3 | 1/3 |
| | après 8h | 2/3 | 1/3 | | | 1/3 | 1/3 | | 3/3 | 1/3 |
| | après 24h | 1/3 | 1/3 | | | 1/3 | 1/3 | | 2/3 | 1/3 |
| Flexibilité (EGC) fissurations / cloquage | 1^{er} cycle | 10/10 | 8/10 | | | 7/10 | 7/10 | | 10/10 | 10/10 |
| | 5^{ème} cycle | 9/10 | 4/8 | | | 4/10 | 6/10 | | 10/10 | 9/7 |

## Revendications

1. Dispersion aqueuse de polymère comprenant des particules de polymère structurées en coeur/écorce, susceptible d'être obtenue par polymérisation en émulsion d'au moins deux compositions de monomères 1 et 2, en au moins deux étapes, ladite dispersion étant **caractérisée en ce que** lesdites compositions de monomères 1 et 2 donnent des polymères P1 et P2 possédant des température de transition vitreuse respectives Tg1 et Tg2, avec Tg1 étant inférieure ou égale à 30°C et Tg2 étant supérieure ou égale à 80°C, et la différence Tg2 - Tg1 variant de 50 à 200°C, et ladite polymérisation étant réalisée en présence d'au moins un tensioactif anionique phosphaté, présent :
a) soit uniquement dans la phase polymère P1,
b) soit dans les phases polymères P1 et P2, à condition dans ce cas que le rapport en poids : tensioactif anionique phosphaté dans P1 / tensioactif anionique phosphaté dans P2 soit supérieur à 1,
le taux en poids dudit tensioactif anionique phosphaté allant de 0,5 à 5% en poids, par rapport au poids total de monomères de ladite dispersion, avec ladite phase P1 représentant un taux allant de 75 à 85% en poids du total de P1 + P2, et P2 représentant un taux allant de 15 à 25% en poids du total de P1 + P2.

2. Dispersion selon la revendication 1, **caractérisée en ce que** ledit tensioactif est présent uniquement dans la phase polymère P1.

3. Dispersion selon la revendication 1 ou 2, **caractérisée en ce que** ledit tensioactif est également présent dans la phase polymère P2, à condition dans ce cas que le rapport en poids : tensioactif anionique phosphaté dans P1 / tensioactif anionique phosphaté dans P2 soit supérieur à 1, et avec un taux global en poids dudit tensioactif par rapport au poids total de monomères de ladite dispersion allant de 0,5 à 5%, de préférence de 0,5 à 3%, et encore plus préférentiellement de 1 à 3%.

4. Dispersion selon l'une des revendications 1 à 3, **caractérisée en ce qu'**une composition de monomères 3 est additionnée et polymérisée entre les compositions de monomères 1 et 2.

5. Dispersion selon la revendication 4, **caractérisée en ce que** la phase polymère P3, correspondant à la composition de monomères 3, représente par rapport à P1 un taux en poids allant de 5 à 50%, et avec P1 + P3 représentant un taux en poids allant de 70 à 90% par rapport au total P1 + P2 + P3, et avec P3 ayant une Tg3 ne dépassant pas 30°C.

6. Dispersion selon l'une des revendications 1 à 5, **caractérisée en ce que** la composition de monomères 2 comprend au moins un monomère ayant une fonction d'agent réticulant interne, à un taux en poids allant de 0,01 à 5% en poids par rapport à la quantité totale de monomères de ladite dispersion, à condition que ce taux ne dépasse pas 5% en poids par rapport à la composition de monomères 2, ledit monomère possédant au moins deux doubles liaisons copolymérisables, et étant choisi parmi :
- les di(méth)acrylates, ou les triacrylates, ou
- les polyallyliques.

7. Dispersion selon l'une des revendications 1 à 6, **caractérisée en ce que** les compositions de monomères 1 et/ou 2 et/ou 3 comprennent au moins un monomère ayant une fonction d'agent greffant, à un taux allant de 0,01 à 2% en poids par rapport à la quantité totale de monomères de ladite dispersion, à condition que ce taux ne dépasse pas 5% en poids par rapport aux compositions de monomères 1 et/ou 2 et/ou 3, choisi parmi le (méth)acrylate d'allyle ou le (méth)acrylate de dicyclopentényl-oxyéthyle (DCPOEMA).

8. Dispersion selon l'une des revendications 1 à 7, **caractérisée en ce que** lesdites compositions de monomères 1 et/ou 2 et/ou 3 comprennent au moins un monomère fonctionnel à un taux allant de 0,1 à 30%, de préférence 0,1 à 20%, et plus préférentiellement 0,1 à 10% en poids par rapport à la quantité totale de monomères de ladite dispersion, à condition que ce taux ne dépasse pas 30% en poids par rapport aux compositions de monomères 1 et/ou 2 et/ou 3, ledit monomère fonctionnel étant sélectionné parmi :
- les promoteurs d'adhésion, ou
- les monomères réticulants à réactivité latente, pouvant être activés au moment de la filmification ou du séchage (impliqués dans une étape de post-réticulation) soit seuls, soit en présence d'un agent co-réactif, lesdits groupements pouvant réagir lors d'une étape ultérieure à la polymérisation.

9. Dispersion selon la revendication 8, **caractérisée en ce que** ledit monomère fonctionnel est un monomère réticulant à réactivité latente sélectionné parmi: les groupements acide, acétoacétoxy, tel que porté par l'acétoacétoxyéthyl (méth)acrylate, diacétone, tel que porté par le diacétone acrylamide, N-hétérocyclique, amine, amide, tel que le N-méthylolacrylamide, oxazoline, mélamine, tel que l'hexa-méthoxy-méthyl-mélamine, aziridine, carbodiimide, oxyrane, isocyanate, triazine, tel que le tris(alkoxycarbonylamino)triazine, avec dans le cas où les groupements fonctionnels latents sont utilisés en combinaison avec un agent co-réactif, ladite dispersion comprend en plus ledit agent co-réactif.

10. Dispersion selon la revendication 9, **caractérisée en ce que** ledit monomère réticulant à réactivité latente est l'acéto-acétoxyéthyl(méth)acrylate, ce dernier pouvant être utilisé en combinaison avec un monomère fonctionnel acrylique (MFA) comme agent co-réactif, ou le diacétone acrylamide, ce dernier pouvant être utilisé en combinaison avec l'acide adipique bis-hydrazide (AADH) comme agent co-réactif.

11. Dispersion selon l'une des revendications 1 à 10, **caractérisée en ce que** ladite composition de monomères 1 est la composition moyenne pondérale d'une composition de semence, ajoutée et pré-polymérisée en étape d'ensemencement, et d'une composition du reste des monomères additionnée et polymérisée après, avec ladite composition du reste de monomères étant identique ou différente par rapport à ladite composition de semence, et en option, ladite composition de monomères 2 est une composition moyenne pondérale d'une composition de semence ajoutée et pré-polymérisée en étape d'ensemencement et d'une composition du reste des monomères additionnée et polymérisée après, avec ladite composition du reste de monomères étant identique ou différente par rapport à ladite composition de semence.

12. Dispersion selon l'une des revendications 1 à 11, **caractérisée en ce que** ledit tensioactif est un phosphate d'alcool gras éthoxylé et/ou propoxylé.

13. Dispersion selon la revendication 12, **caractérisée en ce que** ledit alcool gras est un alcool en C₆ à C₃₂, de préférence en C₉ à C₂₂, avec un nombre total d'unités éthoxy et/ou propoxy allant de 2 à 30.

14. Dispersion selon l'une des revendications 1 à 13, **caractérisée en ce que** Tg1 varie de -60 à 30°C, et Tg2 varie de 80 à 180°C.

15. Dispersion selon l'une des revendications 1 à 14, **caractérisée en ce que** lesdites compositions de monomères 1 et/ou 3 comprennent au moins un agent de transfert de chaîne, de préférence choisis parmi les mercaptans, à un taux allant de 0,01 à 1% en poids par rapport au poids total de monomères de ladite dispersion.

16. Procédé de préparation d'une dispersion telle que définie selon l'une des revendications 1 à 15, **caractérisé en ce qu'**il comprend au moins deux étapes de polymérisation en émulsion d'au moins deux compositions de monomères 1 et 2, donnant des polymères P1 et P2 possédant des Tg respectives Tg1 et Tg2, telles que Tg1 est inférieure ou égale à 30°C et Tg2 est supérieure ou égale à 80°C, et la différence Tg2 - Tg1 varie de 50 à 200°C, et ladite polymérisation étant réalisée en présence d'au moins un tensioactif anionique phosphaté, présent :
a) soit uniquement dans la phase polymère P1,
b) soit dans les phases polymères P1 et P2, à condition dans ce cas que le rapport en poids : tensioactif anionique phosphaté dans P1 / tensioactif anionique phosphaté dans P2 soit supérieur à 1,
le taux en poids dudit tensioactif anionique phosphaté allant de 0,5 à 5% en poids par rapport au poids total de monomères de ladite dispersion, et avec ledit tensioactif étant absent du pied de réacteur ou étant présent de manière à ce que la proportion en poids dudit tensioactif dans la phase aqueuse en pied de réacteur représente un taux en poids allant de 0 à 50% du total dudit tensioactif dans la dispersion.

17. Procédé selon la revendication 16, **caractérisé en ce que** ladite polymérisation en émulsion comprend au moins les étapes suivantes :
a) addition en pied de réacteur d'une composition de semence, identique ou différente de la composition du reste de monomères de ladite composition de monomères 1, ladite semence représentant de 2 à 15% en poids du total de ladite composition de monomères 1, ledit pied de réacteur contenant déjà ledit tensioactif phosphaté en solution aqueuse à un taux en poids représentant 0-50% du total dudit tensioactif dans la dispersion, ou ledit pied de réacteur ne contenant pas ledit tensioactif phosphaté,
b) ensemencement par pré-polymérisation de ladite composition de semence, avec obtention d'une semence de particules de polymère à un taux de conversion d'au moins 60%,
c) addition continue du reste de monomères de ladite composition de monomères 1, ce reste de monomères ayant une composition identique ou différente de celle de la semence, et ce reste de monomères comprenant le reste dudit tensioactif phosphaté, si ledit tensioactif est présent uniquement en phase P1, ou optionnellement comprenant une partie du reste dudit tensioactif phosphaté, si ledit tensioactif est présent dans les deux phases P1 et P2, et polymérisation jusqu'à un taux de conversion d'au moins 95%, avant l'addition de la composition de monomères 2, avec ou sans étape d'ensemencement, et éventuellement avant l'addition d'une composition de monomères 3 selon l'option définie à l'étape d) ci-dessous,
d) en option, addition et polymérisation d'au moins une composition de monomères 3, identique ou différente des compositions de monomères 1 et 2, additionnée avant l'étape e), et avec la phase polymère correspondante P3 représentant un taux en poids allant de 5 à 50% par rapport à P1, et avec P1 + P3 représentant un taux de 70 à 90% en poids du total P1 + P2 + P3, et P3 ayant une Tg3 ne dépassant pas 30°C, lesdites compositions de monomères 1 et/ou 2 et/ou 3 comprenant au moins un monomère fonctionnel, à condition que ce taux ne dépasse pas 30% en poids par rapport aux compositions de monomères 1 et/ou 2 et/ou 3, et/ou lesdites compositions de monomères 1 et/ou 2 et/ou 3 comprenant au moins un monomère greffant, à condition que ce taux ne dépasse pas 5% en poids par rapport aux compositions de monomères 1 et/ou 2 et/ou 3,
e) addition de ladite composition de monomères 2, avec ou sans étape d'ensemencement, et polymérisation jusqu'à un taux de conversion total,
f) en fonction de la présence ou non d'un monomère réticulant à réactivité latente nécessitant un agent co-réactif, addition dudit agent co-réactif après polymérisation.

18. Composition de dispersions aqueuses de polymère **caractérisée en ce qu'**elle est obtenue par simple mélange d'au moins une dispersion telle que définie selon l'une des revendications 1 à 15, ou obtenue par un procédé tel que défini selon la revendication 16 ou 17, avec :
- au moins une autre dispersion telle que définie selon l'une des revendications 1 à 15, ou obtenue par un procédé tel que défini selon la revendication 16 ou 17, mais présentant des caractéristiques différentes, ou
- au moins une autre dispersion différente de celle définie selon l'une des revendications 1 à 15, ou obtenue par un procédé tel que défini selon la revendication 16 ou 17.

19. Composition de revêtement ou de traitement **caractérisée en ce qu'**elle comprend au moins une dispersion telle que définie selon l'une des revendications 1 à 15, ou obtenue par un procédé tel que défini selon la revendication 16 ou 17, ou **en ce qu'**elle comprend au moins une composition de dispersions telle que définie selon la revendication 18.

20. Utilisation d'une dispersion telle que définie selon l'une des revendications 1 à 15, ou obtenue par un procédé tel que défini selon l'une des revendications 16 ou 17, ou d'une composition de dispersions telle que définie selon l'une des revendications 18 ou 19, **caractérisée en ce qu'**il s'agit d'une utilisation dans les revêtements ou le traitement de fibres naturelles ou de fibres de verre ou de fibres de synthèse.

21. Revêtement **caractérisé en ce qu'**il est obtenu par l'utilisation d'au moins une dispersion telle que définie selon l'une des revendications 1 à 15, ou d'une composition de dispersions telle que définie selon la revendication 18, ou d'une composition de revêtement telle que définie selon la revendication 19.

22. Substrat revêtu **caractérisé en ce qu'**il est revêtu par au moins une couche d'un revêtement tel que défini selon la revendication 21.

## Claims

1. Aqueous polymer dispersion comprising polymer particles structured as core/shell, capable of being obtained by emulsion polymerization of at least two monomer compositions 1 and 2 in at least two stages, the said dispersion being **characterized in that** the said monomer compositions 1 and 2 give polymers P1 and P2 having respective glass transition temperatures Tg1 and Tg2, with Tg1 being less than or equal to 30°C and Tg2 being greater than or equal to 80°C and the difference Tg2 - Tg1 varying from 50 to 200°C, and the said polymerization being carried out in the presence of at least one phosphate anionic surfactant present:
a) either solely in the polymer phase P1,
b) or in the polymer phases P1 and P2, provided that, in this case, the phosphate anionic surfactant in P1/phosphate anionic surfactant in P2 ratio by weight is greater than 1,
the level by weight of the said phosphate anionic surfactant ranging from 0.5 to 5% by weight, with respect to the total weight of monomers of the said dispersion, with the said phase P1 representing a level ranging from 75 to 85% by weight of the total of P1 + P2 and P2 representing a level ranging from 15 to 25% by weight of the total of P1 + P2.

2. Dispersion according to Claim 1, **characterized in that** the said surfactant is present solely in the polymer phase P1.

3. Dispersion according to Claim 1 or 2, **characterized in that** the said surfactant is also present in the polymer phase P2, provided that, in this case, the phosphate anionic surfactant in Pl/phosphate anionic surfactant in P2 ratio by weight is greater than 1, and with an overall level by weight of the said surfactant, with respect to the total weight of monomers of the said dispersion, ranging from 0.5 to 5%, preferably from 0.5 to 3% and more preferably still from 1 to 3%.

4. Dispersion according to one of Claims 1 to 3, **characterized in that** a monomer composition 3 is added and polymerized between the monomer compositions 1 and 2.

5. Dispersion according to Claim 4, **characterized in that** the polymer phase P3 corresponding to the monomer composition 3 represents, with respect to P1, a level by weight ranging from 5 to 50%, and with P1 + P3 representing a level by weight ranging from 70 to 90%, with respect to the P1 + P2 + P3 total, and with P3 having a Tg3 not exceeding 30°C.

6. Dispersion according to one of Claims 1 to 5, **characterized in that** the monomer composition 2 comprises at least one monomer having a role of internal crosslinking agent, at a level by weight ranging from 0.01 to 5% by weight, with respect to the total amount of monomers of the said dispersion, provided that this level does not exceed 5% by weight with respect to the monomer composition 2, the said monomer having at least two copolymerizable double bonds and being chosen from:
- di(meth)acrylates or triacrylates, or
- polyallyl compounds.

7. Dispersion according to one of Claims 1 to 6, **characterized in that** the monomer compositions 1 and/or 2 and/or 3 comprise at least one monomer having a role of grafting agent, at a level ranging from 0.01 to 2% by weight, with respect to the total amount of monomers of the said dispersion, provided that this level does not exceed 5% by weight with respect to the monomer compositions 1 and/or 2 and/or 3, chosen from allyl (meth)acrylate or dicyclopentenyloxyethyl (meth)acrylate (DCPOEMA).

8. Dispersion according to one of Claims 1 to 7, **characterized in that** the said monomer compositions 1 and/or 2 and/or 3 comprise at least one functional monomer at a level ranging from 0.1 to 30% by weight, preferably from 0.1 to 20% by weight and more preferably from 0.1 to 10% by weight, with respect to the total amount of monomers of the said dispersion, provided that this level does not exceed 30% by weight with respect to the monomer compositions 1 and/or 2 and/or 3, the said functional monomer being selected from:
- adhesion promoters, or
- crosslinking monomers having latent reactivity, that is to say which can be activated at the time of film formation or of drying (involved in a postcrosslinking stage), either alone or in the presence of a co-reactive agent, it being possible for the said groups to react during a stage subsequent to the polymerization.

9. Dispersion according to Claim 8, **characterized in that** the said functional monomer is a crosslinking monomer having latent reactivity selected from the following groups: acid, acetoacetoxy, such as carried by acetoacetoxyethyl (meth)acrylate, diacetone, such as carried by diacetone acrylamide, N-heterocyclic, amine, amide, such as N-methylolacrylamide, oxazoline, melamine, such as hexamethoxymethylmelamine, aziridine, carbodiimide, oxirane, isocyanate or triazine, such as tris(alkoxycarbonylamino)triazine, with, in the case where the latent functional groups are used in combination with a co-reactive agent, the said dispersion additionally comprising the said co-reactive agent.

10. Dispersion according to Claim 9, **characterized in that** the said crosslinking monomer having latent reactivity is acetoacetoxyethyl (meth)acrylate, it being possible for the latter to be used in combination with an acrylic functional monomer (AFM) as co-reactive agent, or diacetone acrylamide, it being possible for the latter to be used in combination with adipic acid dihydrazide (AADH) as co-reactive agent.

11. Dispersion according to one of Claims 1 to 10, **characterized in that** the said monomer composition 1 is the mean composition by weight of a seed composition added and prepolymerized in the seeding stage and of a composition of the remaining monomers added and polymerized afterwards, with the said composition of the remaining monomers being identical or different with respect to the said seed composition, and optionally the said monomer composition 2 is a mean composition by weight of a seed composition added and prepolymerized in the seeding stage and of a composition of the remaining monomers added and polymerized afterwards, with the said composition of the remaining monomers being identical or different with respect to the said seed composition.

12. Dispersion according to one of Claims 1 to 11, **characterized in that** the said surfactant is a phosphate of an ethoxylated and/or propoxylated fatty alcohol.

13. Dispersion according to Claim 12, **characterized in that** the said fatty alcohol is a C₆ to C₃₂, preferably C₉ to C₂₂, alcohol with a total number of ethoxy and/or propoxy units ranging from 2 to 30.

14. Dispersion according to one of Claims 1 to 13, **characterized in that** Tg1 varies from -60 to 30°C, and Tg2 varies from 80 to 180°C.

15. Dispersion according to one of Claims 1 to 14, **characterized in that** the said monomer compositions 1 and/or 3 comprise at least one chain-transfer agent, preferably chosen from mercaptans, at a level ranging from 0.01 to 1% by weight, with respect to the total weight of monomers of the said dispersion.

16. Process for the preparation of a dispersion as defined according to one of Claims 1 to 15, **characterized in that** it comprises at least two stages of emulsion polymerization of at least two monomer compositions 1 and 2, giving polymers P1 and P2 having respective Tg values Tg1 and Tg2 such that Tg1 is less than or equal to 30°C and Tg2 is greater than or equal to 80°C and the difference Tg2 - Tg1 varies from 50 to 200°C, the said polymerization being carried out in the presence of at least one phosphate anionic surfactant present:
a) either solely in the polymer phase P1,
b) or in the polymer phases P1 and P2, provided that, in this case, the phosphate anionic surfactant in Pl/phosphate anionic surfactant in P2 ratio by weight is greater than 1,
the level by weight of the said phosphate anionic surfactant ranging from 0.5 to 5% by weight, with respect to the total weight of monomers of the said dispersion, and the said surfactant being absent from the reactor heel or being present so that the proportion by weight of the said surfactant in the reactor heel aqueous phase represents a level by weight ranging from 0 to 50% of the total of the said surfactant in the dispersion.

17. Process according to Claim 16, **characterized in that** the said emulsion polymerization comprises at least the following stages:
a) addition to the reactor heel of a seed composition, identical to or different from the composition of the remaining monomers of the said monomer composition 1, the said seed representing from 2 to 15% by weight of the total of the said monomer composition 1, the said reactor heel already comprising the said phosphate surfactant in aqueous solution at a level by weight representing 0-50% of the total of the said surfactant in the dispersion or the said reactor heel not comprising the said phosphate surfactant,
b) seeding by prepolymerization of the said seed composition, with production of a seed of polymer particles at a degree of conversion of at least 60%,
c) continuous addition of the remaining monomers of the said monomer composition 1, these remaining monomers having a composition identical to or different from that of the seed and these remaining monomers comprising the remaining said phosphate surfactant, if the said surfactant is present solely in phase P1, or optionally comprising a portion of the remaining said phosphate surfactant, if the said surfactant is present in the two phases P1 and P2, and polymerization up to a degree of conversion of at least 95%, before the addition of the monomer composition 2, with or without a seeding stage, and optionally before the addition of a monomer composition 3 according to the option defined in stage d) below,
d) optionally, addition and polymerization of at least one monomer composition 3, identical to or different from the monomer compositions 1 and 2, added before stage e), and with the corresponding polymer phase P3 representing a level by weight ranging from 5 to 50 0, with respect to P1, and with P1 + P3 representing a level of 70 to 90% by weight of the P1 + P2 + P3 total and with P3 having a Tg3 not exceeding 30°C, the said monomer compositions 1 and/or 2 and/or 3 comprising at least one functional monomer, provided that this level does not exceed 30% by weight, with respect to the monomer compositions 1 and/or 2 and/or 3, and/or the said monomer compositions 1 and/or 2 and/or 3 comprising at least one grafting monomer, provided that this level does not exceed 5% by weight with respect to the monomer compositions 1 and/or 2 and/or 3,
e) addition of the said monomer composition 2, with or without a seeding stage, and polymerization up to a complete degree of conversion
f) according to the presence or absence of a crosslinking monomer having latent reactivity requiring a co-reactive agent, addition of the said co-reactive agent after the polymerization.

18. Composition formed of aqueous polymer dispersions, **characterized in that** it is obtained by simple mixing of at least one dispersion as defined according to one of Claims 1 to 15 or obtained by a process as defined according to Claim 16 or 17 with:
- at least one other dispersion as defined according to one of Claims 1 to 15 or obtained by a process as defined according to Claim 16 or 17 but exhibiting different characteristics, or
- at least one other dispersion different from that defined according to one of Claims 1 to 15 or obtained by a process as defined according to Claim 16 or 17.

19. Coating or treatment composition, **characterized in that** it comprises at least one dispersion as defined according to one of Claims 1 to 15 or obtained by a process as defined according to Claim 16 or 17 or **in that** it comprises at least one composition formed of dispersions as defined according to Claim 18.

20. Use of a dispersion as defined according to one of Claims 1 to 15, or obtained by a process as defined according to either of Claims 16 and 17 or of a composition formed of dispersions as defined according to either of Claims 18 and 19, **characterized in that** the use concerned is that in coatings or the treatment of natural fibres or glass fibres or synthetic fibres.

21. Coating, **characterized in that** it is obtained by the use of at least one dispersion as defined according to one of Claims 1 to 15 or of a composition formed of dispersions as defined according to Claim 18 or of a coating composition as defined according to Claim 19.

22. Coated substrate, **characterized in that** it is coated with at least one layer of a coating as defined according to Claim 21.

## Patentansprüche

1. Wässrige Polymerdispersion, die Polymerteilchen mit Kern/Schale-Struktur umfasst und durch Emulsionspolymerisation von mindestens zwei Monomerenzusammensetzungen 1 und 2 in mindestens zwei Schritten erhältlich ist, wobei die Dispersion **dadurch gekennzeichnet ist, dass** die Monomerenzusammensetzungen 1 und 2 Polymere P1 und P2 mit Glasübergangstemperaturen Tg1 bzw. Tg2 ergeben, wobei Tg1 kleiner gleich 30°C ist und Tg2 größer gleich 80°C ist und die Differenz Tg2 - Tg1 von 50 bis 200°C variiert und die Polymerisation in Gegenwart mindestens eines anionischen Phosphattensids, das:
a) entweder nur in der Polymerphase P1,
b) oder in den Polymerphasen P1 und P2, mit der Maßgabe, dass in diesem Fall das GewichtsVerhältnis anionisches Phosphattensid in P1 / anionisches Phosphattensid in P2 größer 1 ist,
vorliegt, wobei der Gewichtsanteil des anionischen Phosphattensids im Bereich von 0,5 bis 5 Gew.-%, bezogen auf das Gesamtgewicht der Monomere der Dispersion, liegt, wobei die Phase P1 einen Anteil im Bereich von 75 bis 85 Ges.-% der Summe von P1 + P2 ausmacht und P2 einen Anteil im Bereich von 15 bis 25 Gew.-% der Summe von P1 + P2 ausmacht, durchgeführt wird.

2. Dispersion nach Anspruch 1, **dadurch gekennzeichnet, dass** das Tensid nur in der Polymerphase P1 vorliegt.

3. Dispersion nach Anspruch 1 oder 2, **dadurch gekennzeichnet, dass** das Tensid auch in der Polymerphase P2 vorliegt, mit der Maßgabe, dass in diesem Fall das Gewichtsverhältnis anionisches Phosphattensid in P1 / anionisches Phosphattensid in P2 größer 1 ist, und mit einem Gesamtgewichtsanteil des Tensids, bezogen auf das Gesamtgewicht der Monomere der Dispersion, im Bereich von 0,5 bis 5%, vorzugsweise 0,5 bis 3% und noch weiter bevorzugt 1 bis 3%.

4. Dispersion nach einem der Ansprüche 1 bis 3, **dadurch gekennzeichnet, dass** eine Monomerenzusammensetzung 3 zugegeben und zwischen den Monomerenzusammensetzungen 1 und 2 polymerisiert wird.

5. Dispersion nach Anspruch 4, **dadurch gekennzeichnet, dass** die Polymerphase P3, die der Monomerenzusammensetzung 3 entspricht, bezogen auf P1 einen Gewichtsanteil im Bereich von 5 bis 50% ausmacht, wobei P1 + P3 einen Gewichtsanteil im Bereich von 70 bis 90%, bezogen auf die Summe von P1 + P2 + P3, ausmachen und P3 eine Tg3 von höchstens 30°C aufweist.

6. Dispersion nach einem der Ansprüche 1 bis 5, **dadurch gekennzeichnet, dass** die Monomerenzusammensetzung 2 mindestens ein Monomer mit der Funktion eines internen Vernetzungsmittels in einem Gewichtsanteil im Bereich von 0,01 bis 5 Ges.-%, bezogen auf die Gesamtmenge der Monomere der Dispersion, umfasst, mit der Maßgabe, dass dieser Anteil nicht über 5 Gew.-%, bezogen auf die Monomerenzusammensetzung 2, liegt, wobei das Monomer mindestens zwei copolymerisierbare Doppelbindungen aufweist und unter:
- Di(meth)acrylaten oder Triacrylaten oder
- Polyallylverbindungen
ausgewählt ist.

7. Dispersion nach einem der Ansprüche 1 bis 6, **dadurch gekennzeichnet, dass** die Monomerenzusammensetzungen 1 und/oder 2 und/oder 3 mindestens ein Monomer mit der Funktion eines Pfropfungsmittels in einem Anteil im Bereich von 0,01 bis 2 Gew.-%, bezogen auf die Gesamtmenge der Monomere der Dispersion, umfassen, mit der Maßgabe, dass dieser Anteil nicht über 5 Ges.-%, bezogen auf die Monomerenzusammensetzungen 1 und/oder 2 und/oder 3, liegt, wobei das Monomer unter Allyl(meth)acrylat oder Dicyclopentenyloxyethyl(meth)acrylat (DCPOEMA) ausgewählt ist.

8. Dispersion nach einem der Ansprüche 1 bis 7, **dadurch gekennzeichnet, dass** die Monomerenzusammensetzungen 1 und/oder 2 und/oder 3 mindestens ein funktionelles Monomer in einem Anteil im Bereich von 0,1 bis 30 Gew.-%, vorzugsweise 0,1 bis 20 Gew.-% und weiter bevorzugt 0,1 1 bis 10 Gew.-%, bezogen auf die Gesamtmenge der Monomere der Dispersion, umfassen, mit der Maßgabe, dass dieser Anteil nicht über 30 Gew.-%, bezogen auf die Monomerenzusammensetzungen 1 und/oder 2 und/oder 3, liegt, wobei das funktionelle Monomer unter:
- Haftvermittlern oder
- vernetzenden Monomeren mit latenter Reaktivität, die entweder alleine oder in Gegenwart eines Coreagens zum Zeitpunkt der Filmbildung oder Trocknung aktiviert (an einem Nachvernetzungsschritt beteiligt) werden können, wobei die Gruppen in einem auf die Polymerisation folgenden Schritt reagieren können, ausgewählt ist.

9. Dispersion nach Anspruch 8, **dadurch gekennzeichnet, dass** es sich bei dem funktionellen Monomer um ein vernetzendes Monomer mit latenter Reaktivität, ausgewählt unter Säuregruppen, Acetoacetoxygruppen, wie sie von Acetoacetoxyethyl(meth)-acrylat getragen werden, Diacetongruppen, wie sie von Diacetonacrylamid getragen werden, N-heterocylischen Gruppen, Amingruppen, Amidgruppen, wie N-Methylolacrylamidgruppen, Oxazolingruppen, Melamingruppen, wie Hexamethoxymethylmelamingruppen, Aziridingruppen, Carbodiimidgruppen, Oxirangruppen, Isocyanatgruppen und Triazingruppen, wie Tris(alkoxycarbonylamino)triazin-gruppen, handelt, wobei in dem Fall, dass die latenten funktionellen Gruppen in Kombination mit einem Coreagens verwendet werden, die Dispersion außerdem das Coreagens umfasst.

10. Dispersion nach Anspruch 9, **dadurch gekennzeichnet, dass** es sich bei dem vernetzenden Monomer mit latenter Reaktivität um Acetoacetoxyethyl(meth)-acrylat, wobei letzteres in Kombination mit einem funktionellen Acrylmonomer (FAM) als Coreagens verwendet wird, oder um Diacetonacrylamid, wobei letzteres in Kombination mit Adipinsäuredihydrazid (AADH) als Coreagens verwendet wird, handelt.

11. Dispersion nach einem der Ansprüche 1 bis 10, **dadurch gekennzeichnet, dass** es sich bei der Monomerenzusammensetzung 1 um die gewichtsmittlere Zusammensetzung einer im Saatschritt zugegebenen und vorpolymerisierten Saatzusammensetzung und einer danach zugegebenen und polymerisierten Zusammensetzung des Rests der Monomere handelt, wobei die Zusammensetzung des Rests der Monomere bezüglich der Saatzusammensetzung identisch oder verschieden ist, und es sich gegebenenfalls bei der Monomerenzusammensetzung 2 um eine gewichtsmittlere Zusammensetzung einer im Saatschritt zugegebenen und vorpolymerisierten Saatzusammensetzung und einer danach zugegebenen und polymerisierten Zusammensetzung des Rests der Monomere handelt, wobei die Zusammensetzung des Rests der Monomere bezüglich der Saatzusammensetzung gleich oder verschieden ist.

12. Dispersion nach einem der Ansprüche 1 bis 11, **dadurch gekennzeichnet, dass** es sich bei dem Tensid um ein Phosphat eines ethoxylierten und/oder propoxylierten Fettalkohols handelt.

13. Dispersion nach Anspruch 12, **dadurch gekennzeichnet, dass** es sich bei dem Fettalkohol um einen C₆-bis C₃₂-Fettalkohol, vorzugsweise einen C₉- bis C₂₂-Fettalkohol, mit einer Gesamtzahl von Ethoxy- oder Propoxyeinheiten im Bereich von 2 bis 30 handelt.

14. Dispersion nach einem der Ansprüche 1 bis 13, **dadurch gekennzeichnet, dass** Tg1 von -60 bis 30°C und Tg2 von 80 bis 180°C variiert.

15. Dispersion nach einem der Ansprüche 1 bis 14, **dadurch gekennzeichnet, dass** die Monomerenzusammensetzungen 1 und/oder 3 mindestens ein Kettenübertragungsmittel, das vorzugsweise unter Mercaptanen ausgewählt ist, in einem Anteil von 0,01 bis 1 Ges.-%, bezogen auf das Gesamtgewicht der Monomere der Dispersion, umfassen.

16. Verfahren zur Herstellung einer Dispersion gemäß einem der Ansprüche 1 bis 15, **dadurch gekennzeichnet, dass** es mindestens zwei Schritte der Emulsionspolymerisation von mindestens zwei Monomerenzusammensetzungen 1 und 2 umfasst, die Polymere P1 und P2 mit Tg Tg1 bzw. Tg2 ergeben, wobei Tg1 kleiner gleich 30°C ist und Tg2 größer gleich 80°C ist und die Differenz Tg2 - Tg1 von 50 bis 200°C variiert und die Polymerisation in Gegenwart mindestens eines anionischen Phosphattensids, das:
a) entweder nur in der Polymerphase P1,
b) oder in den Polymerphasen P1 und P2, mit der Maßgabe, dass in diesem Fall das GewichtsVerhältnis anionisches Phosphattensid in P1 / anionisches Phosphattensid in P2 größer 1 ist,
vorliegt, wobei der Gewichtsanteil des anionischen Phosphattensids im Bereich von 0,5 bis 5 Gew.-%, bezogen auf das Gesamtgewicht der Monomere der Dispersion, liegt, und wobei das Tensid in der Reaktorvorlage fehlt oder in einer solchen Menge vorliegt, dass der Gewichtsanteil des Tensids in der wässrigen Phase der Reaktorvorlage einen Gewichtsanteil im Bereich von 0 bis 50% des gesamten Tensids in der Dispersion ausmacht.

17. Verfahren nach Anspruch 16, **dadurch gekennzeichnet, dass** die Emulsionspolymerisation zumindest die folgenden Schritte umfasst:
a) Vorlegen einer Saatzusammensetzung, die mit der Zusammensetzung des Rests der Monomere der Monomerenzusammensetzung 1 identisch oder davon verschieden ist, wobei die Saat 2 bis 15 Gew.-% der Gesamtheit der Monomerenzusammensetzung 1 ausmacht, im Reaktor, wobei der Reaktor bereits das Phosphattensid in wässriger Lösung in einem Gewichtsanteil von 0-50% der Gesamtheit des Tensids in der Dispersion als Vorlage enthält oder der Reaktor das Phosphattensid nicht als Vorlage enthält,
b) Saatbildung durch Vorpolymerisation der Saatzusammensetzung unter Erhalt einer Saat von Polymerteilchen bei einem Umsatz von mindestens 60%,
c) kontinuierliche Zugabe des Rests der Monomere der Monomerenzusammensetzung 1, wobei dieser Rest der Monomere die gleiche Zusammensetzung wie die Saat aufweist oder davon verschieden ist und dieser Rest der Monomere den Rest des Phosphattensids umfasst, wenn das Tensid nur in Phase P1 vorliegt, oder gegebenenfalls einen Teil des Rests des Phosphattensids umfasst, wenn das Tensid in den beiden Phasen P1 und P2 vorliegt, und Polymerisation bis zu einem Umsatz von mindestens 95% vor der Zugabe der Monomerenzusammensetzung 2 mit oder ohne Saatbildungsschritt und gegebenenfalls vor der Zugabe einer Monomerenzusammensetzung 3 gemäß der nachstehend in Schritt d) definierten Option,
d) gegebenenfalls Zugabe und Polymerisation mindestens einer vor Schritt e) zugegebenen Monomerenzusammensetzung 3, die mit den Monomerenzusammensetzungen 1 und 2 identisch oder davon verschieden ist, wobei die entsprechende Polymerphase P3 einen Gewichtsanteil im Bereich von 5 bis 50%, bezogen auf P1, ausmacht, wobei P1 + P3 einen Gewichtsanteil im Bereich von 70 bis 90%, bezogen auf die Summe von P1 + P2 + P3, ausmachen und P3 eine Tg3 von höchstens 30°C aufweist, wobei die Monomerenzusammensetzungen 1 und/oder 2 und/oder 3 mindestens ein funktionelles Monomer umfassen, mit der Maßgabe, dass dieser Anteil nicht über 30 Ges.-%, bezogen auf die Monomerenzusammensetzungen 1 und/oder 2 und/oder 3, liegt, und/oder die Monomerenzusammensetzungen 1 und/oder 2 und/oder 3 mindestens ein Pfropfmonomer umfassen, mit der Maßgabe, dass dieser Anteil nicht über 5 Gew.-%, bezogen auf die Monomerenzusammensetzungen 1 und/oder 2 und/oder 3, liegt,
e) Zugabe der Monomerenzusammensetzung 2 mit oder ohne Saatbildungsschritt und Polymerisation bis zum vollständigen Umsatz,
f) je nach Anwesenheit oder Abwesenheit eines vernetzenden Monomers mit latenter Reaktivität, das ein Coreagens erfordert, Zugabe des Coreagens nach der Polymerisation.

18. Zusammensetzung von wässrigen Polymerdispersionen, **dadurch gekennzeichnet, dass** sie durch einfaches Mischen mindestens einer Dispersion gemäß einem der Ansprüche 1 bis 15 oder nach einem Verfahren gemäß Anspruch 16 oder 17 hergestellten Dispersion mit:
- mindestens einer anderen Dispersion gemäß einem der Ansprüche 1 bis 15 oder nach einem Verfahren gemäß Anspruch 16 oder 17 hergestellten Dispersion, die jedoch andere Merkmale aufweist, oder
- mindestens einer anderen Dispersion, die von der Dispersion gemäß einem der Ansprüche 1 bis 15 oder nach einem Verfahren gemäß Anspruch 16 oder 17 hergestellten Dispersion verschieden ist,
erhalten wird.

19. Beschichtungs- oder Behandlungszusammensetzung, **dadurch gekennzeichnet, dass** sie mindestens eine Dispersion gemäß einem der Ansprüche 1 bis 15 oder nach einem Verfahren gemäß Anspruch 16 oder 17 hergestellte Dispersion oder mindestens eine Zusammensetzung von Dispersionen gemäß Anspruch 18 umfasst.

20. Verwendung einer Dispersion gemäß einem der Ansprüche 1 bis 15 oder nach einem Verfahren gemäß Anspruch 16 oder 17 hergestellten Dispersion oder einer Zusammensetzung von Dispersionen gemäß Anspruch 18 oder 19, **dadurch gekennzeichnet, dass** es sich um eine Verwendung in Beschichtungen oder die Behandlung von Naturfasern oder Glasfasern oder Kunstfasern handelt.

21. Beschichtung, **dadurch gekennzeichnet, dass** sie durch Verwendung mindestens einer Dispersion gemäß einem der Ansprüche 1 bis 15 oder einer Zusammensetzung von Dispersionen gemäß Anspruch 18 hergestellten Dispersion oder einer Beschichtungszusammensetzung gemäß Anspruch 19 erhalten wird.

22. Beschichtetes Substrat, **dadurch gekennzeichnet, dass** es mit mindestens einer Schicht einer Beschichtung gemäß Anspruch 21 beschichtet ist.
